# EUROPEAN PATENT APPLICATION

(11) **EP 2 083 264 A1**
(43) Date of publication of application: **29.07.2009**
(21) Application number: 07707630.5
(22) Date of filing: 29.01.2007
(51) Int. Cl.: G01N 27/416, C12M 1/00, C12M 1/34, G01N 33/543

(54) **ELECTROLYTE-CONTAINING SHEET FOR USE IN SPECIFIC DETECTION OF ANALYTE USING PHOTOCURRENT, AND, EMPLOYING THE SHEET, METHOD OF DETECTION, SENSOR UNIT AND MEASURING APPARATUS**

(30) Priority: 10.07.2006 JP 2006189654; 30.11.2006 JP 2006323213
(71) Applicant: Toto Ltd., Kitakyushu-shi, Fukuoka-ken 802-8601 (JP)
(72) Inventor: BEKKI, Makoto, Kitakyushu-shi, Fukuoka 8028601 (JP); OHARA, Hitoshi, Kitakyushu-shi, Fukuoka 802-8601 (JP); SONEZAKI, Shuji, Kitakyushu-shi, Fukuoka 802-8601 (JP); YAMANA, Yoshimasa, Kitakyushu-shi, Fukuoka 802-8601 (JP)
(74) Representative: Kinkeldey, Daniela
(86) International application number: PCT/JP2007/051399
(87) International publication number: WO 2008/007468

(57) **Abstract**

There is disclosed an electrolyte medium which makes it possible to significantly simplify device structure and detection procedure as well as to detect photocurrent with high sensitivity and accuracy, in specific detection of an analyte with use of photocurrent generated by photo-excitation of a sensitizing dye. The electrolyte-containing sheet comprises a hydrous substrate; and an electrolyte contained in the hydrous substrate. The electrolyte-containing sheet is used as an electrolyte medium in specific detection of an analyte with use of photocurrent generated by photo-excitation of a sensitizing dye. A gel matrix or a water-absorbent substrate can be used as the hydrous substrate.

## Description

### BACKGROUND OF THE INVENTION

### Technical Field

The present invention relates to an electrolyte-containing sheet usable as an electrolyte medium, instead of an electrolytic solution, when specifically detecting an analyte having specific bond properties, such as a nucleic acid, an endocrine disruptor and an antigen, using photocurrent. The present invention also relates to a detecting method, a sensor unit and a measuring device employing the electrolyte-containing sheet.

### Background Art

Genetic diagnosis for analyzing DNA in a biological sample is regarded as a promising new prevention and diagnosis technique against/for various diseases. As a technique for simply and accurately conducting such DNA analysis, there is known a method for analyzing DNA in which the analyte DNA is hybridized with a fluorescence-labeled DNA probe having a sequence complementary to that of the analyte DNA, and a fluorescent signal generated in the hybridization is detected (see Patent Document 1 and Patent Document 2, for example). The method uses dye fluorescence to detect the double-stranded DNA synthesized by hybridization.

There has been proposed a method of specifically detecting an analyte (biomolecules such as DNA and protein) using the photocurrent generated by photo-excitation of a sensitizing dye (see Patent Document 3 and Non-Patent Document 1, for example). Such detecting method is performed using a sensor unit filled with an electrolytic solution.

On the other hand, there is known use of a gel such as agarose as an electrolytic solution-containing element in a micro biosensor using an oxygen electrode which converts an increasing/decreasing amount of oxygen into an electrical signal (see Patent Document 4, for example).

Patent Document 1: Japanese Patent Laid-Open Publication No. H7-107999
Patent Document 2: Japanese Patent Laid-Open Publication No. H11-315095,
Patent Document 3: Japanese Patent Laid-Open Publication No. 2006-119111
Patent Document 4: Japanese Patent Publication No. H5-84860
Non-Patent Document 1: Nakamura, et al., "new detection method of DNA double-stranded using photoelectric conversion" (prepared lecture texts of the Chemical Society of Japan, Vol.81ST No.2 (2002), page 947)

### SUMMARY OF THE INVENTION

The inventors have found that an electrolyte-containing sheet can be used as an electrolyte medium, instead of an electrolytic solution, in specific detection of an analyte with use of photocurrent generated by photo-excitation of a sensitizing dye, thereby attaining significant simplification of device structure and detection procedure. The inventors have also found that it is possible to detect photocurrent with high sensitivity and accuracy by using this electrolyte-containing sheet.

Accordingly, it is an object of the present invention to provide an electrolyte medium which makes it possible to significantly simplify device structure and detection procedure as well as to detect photocurrent with high sensitivity and accuracy, in specific detection of an analyte with use of photocurrent generated by photo-excitation of a sensitizing dye.

According to the present invention, there is provided an electrolyte-containing sheet comprising a hydrous substrate; and an electrolyte contained in the hydrous substrate, wherein the electrolyte-containing sheet is used as an electrolyte medium in specific detection of an analyte with use of photocurrent generated by photo-excitation of a sensitizing dye.

According to the present invention, there is also provided a method of specifically detecting an analyte with use of photocurrent, comprising the steps of:
contacting a working electrode and a counter electrode with the electrolyte-containing sheet, wherein the working electrode has a surface provided with a probe substance to which the analyte is specifically bonded directly or indirectly, wherein a sensitizing dye is immobilized to the working electrode through the bonding;
applying light to the working electrode to photoexcite the sensitizing dye; and
detecting photocurrent flowing between the working electrode and the counter electrode due to electron transfer from the photoexcited sensitizing dye to the working electrode.

According to the first embodiment of the present invention, there is further provided a sensor unit for use in specific detection of an analyte with use of photocurrent generated by photo-excitation of a sensitizing dye, comprising:
a working electrode;
a counter electrode opposed to the working electrode; and
the electrolyte-containing sheet, the sheet being sandwiched between the working electrode and the counter electrode,
wherein each of the working electrode and the counter electrode has an electrode surface in contact with the electrolyte-containing sheet.

According to the second embodiment of the present invention, there is also provided a sensor unit for use in specific detection of an analyte with use of photocurrent generated by photo-excitation of a sensitizing dye, comprising:
an electrode unit on which a working electrode and a counter electrode are patterned on a same plane; and
the electrolyte-containing sheet provided in contact with an electrode surface of each of the working electrode and the counter electrode.

According to the present invention, there is further provided a measuring device for use in specific detection of an analyte with use of photocurrent generated by photo-excitation of a sensitizing dye, comprising:
the sensor unit;
a light source for applying light to the working electrode; and
an ammeter for measuring electric current flowing between the working electrode and the counter electrode.

### BRIEF DESCRIPTION OF THE DRAWINGS

Figs. 1A and 1B illustrate an example before and after assembling a sensor unit and a measuring device according to the first embodiment of the present invention, in which Fig. 1A shows a cross-sectional view after the assembling and Fig. 1B shows an exploded view before the assembling.
Figs. 2A and 2B illustrate an example before and after assembling a sensor unit and a measuring device according to the second embodiment of the present invention, in which Fig. 2A shows a cross-sectional view after the assembling and Fig. 2B shows an exploded view before the assembling.
Figs. 3A and 3B illustrate another example before and after assembling a sensor unit and a measuring device according to the second embodiment of the present invention, in which Fig. 3A shows a cross-sectional view after the assembling and Fig. 3B shows an exploded view before the assembling.
Figs. 4A and 4B illustrate another example before and after assembling a sensor unit and a measuring device according to the second embodiment of the present invention, in which Fig. 4A shows a cross-sectional view after the assembling and Fig. 4B shows an exploded view before the assembling.
Figs. 5A and 5B illustrate a step of immobilizing an analyte to a probe substance when the analyte is a single-stranded nucleic acid and the probe substance is a single-stranded nucleic acid having properties complementary to the nucleic acid, in which Fig. 5A shows a case where the analyte is preliminarily labeled with a sensitizing dye and Fig. 5B shows a case of adding a sensitizing dye capable of intercalating into a double-stranded nucleic acid.
Fig. 6 illustrates a step of immobilizing the analyte to the probe substance when the analyte is a ligand, a mediator substance is a receptor protein molecule and the probe substance is a double-stranded nucleic acid.
Fig. 7 illustrates an example of an electrode unit.
Fig. 8 illustrates a step of immobilizing analytes to a probe substance when the analyte and the second analyte having specific bond properties competing with each other are antigens, and the probe substance is an antibody.
Fig. 9 is a graph showing photocurrent values measured in tetrapropyl ammonium iodide (NPr4I) concentration when using a gel sheet (1% of agarose gel), obtained in Example A1 and when using an electrolytic solution (aqueous solution).
Fig. 10 is a graph showing relationship between gel concentration (agarose concentration) and photocurrent value at each rhodamine-labeled ssDNA concentration of 10 nM and 100 nM, obtained in Example A2.
Fig. 11 is a graph showing relationship between gel sheet thickness and photocurrent value at each rhodamine-labeled ssDNA concentration of 10 nM and 100 nM, obtained in Example A3.
Fig. 12 is a graph showing photocurrent values when producing a gel sheet via mixing adjustment or when producing a gel sheet via immersing adjustment at each rhodamine-labeled ssDNA concentration of 0nM, 10nM and 100nM, obtained in Example A4.
Fig. 13 is a schematic view of "Rheometer CR200D" (produced by Sun Scientific Co.) used in Example A5.
Fig. 14 is a figure explaining a method for measuring gel strength performed in Example A5.
Fig. 15 is a graph showing relationship between gel concentration (agarose concentration) and gel strength, obtained in Example A5.
Fig. 16 is a graph showing photocurrent values when using a gel sheet containing of 1% by weight of agarose and a case of using a gel sheet containing 7.5 % by weight of acrylamide at each rhodamine-labeled ssDNA concentration of 0 nM, 10 nM and 100 nM, obtained in Example A6.
Fig. 17 is a graph showing photocurrent values when using various kinds of electrolytes at each rhodamine-labeled ssDNA concentration of 0 nM, 10 nM and 100 nM, obtained in Example A7.
Fig. 18 is a graph showing photocurrent values in which a target DNA concentration is 1 µM when using a perfectly matching (PM) probe, a strand probe having a single nucleotide variation (SNP), and a completely mismatching (MM) probe, obtained in Example A8.
Fig. 19 is a graph showing photocurrent values in which a target DNA concentration is 100 nM when using a perfectly matching (PM) probe, a strand probe having a single nucleotide variation (SNP), and a completely mismatching (MM) probe, obtained in Example A8.
Fig. 20 is a graph showing photocurrent values measured for 100nM of ssDNA and 100nM of rhodamine-labeled ssDNA at each tetrapropyl ammonium iodide (NPr4I) concentration, when using an electrolyte-containing absorbent sheet (filter paper), obtained in Example B1.
Fig. 21 is a graph showing photocurrent values when using various kinds of electrolytes at each rhodamine-labeled ssDNA concentration of 0 nM, 10 nM and 100 nM, obtained in Example B2.
Fig. 22 is a graph showing relationship between thickness of an electrolyte-containing absorbent sheet and photocurrent value in each rhodamine-labeled ssDNA concentration of 100 nM and 1 µM, obtained in Example B3.
Fig. 23 is a graph showing photocurrent values when using each electrolyte-containing absorbent sheet at ssDNA concentration of 100 nM and at each rhodamine-labeled ssDNA concentration of 100nM and 1µM, obtained in Example B4.
Fig. 24 is a graph showing relationship between water content of the electrolyte-containing absorbent sheet and photocurrent value, obtained in Example B5.
Fig. 25 is a graph showing photocurrent values of each electrolyte when using a perfectly matching (PM) probe, a strand probe having a single nucleotide variation (SNP), and a completely mismatching (MM) probe, obtained in Example B6.
Fig. 26 is a graph showing photocurrent values when producing the absorbent sheet by immersing a water-absorbent substrate into an electrolytic solution immediately before the measuring or when a hydrous sheet is dried after being immersed into an electrolytic solution and water is dripped on the water-absorbent sheet immediately before use, in the cases of using a strand probe having a single nucleotide variation (SNP) and a completely mismatching (MM) probe, obtained in Example B7.
Fig. 27 is a cross-sectional view illustrating an example of a flow-cell-type measuring cell.
Fig. 28 is an exploded perspective view illustrating the same measuring cell shown in Fig. 27.
Fig. 29 is a graph showing photocurrent values when using an aqueous electrolytic solution or when using an electrolyte-containing absorbent sheet, in the cases of using a strand probe having a single nucleotide variation (SNP) and a completely mismatching (MM) probe, obtained in Example B8.

### DETAILED DESCRIPTION OF THE INVENTION

### Electrolyte-Containing Sheet

An electrolyte-containing sheet according to the present invention is an electrolyte-containing body in the form of a sheet used as an electrolyte medium in specific detection of an analyte with use of photocurrent generated by photo-excitation of a sensitizing dye. The electrolyte-containing sheet comprises a hydrous substrate and an electrolyte contained in the hydrous substrate. The electrolyte can participate in supply and receipt of electrons among a sensitizing dye, a working electrode, and a counter electrode, by transferring freely in the hydrous substrate. Photocurrent generated by photo-excitation of a sensitizing dye can therefore flow between the working electrode and the counter electrode by sandwiching the electrolyte-containing sheet between the working electrode and the counter electrode to keep the surface of each electrode in contact with the electrolyte-containing sheet. Although the electrolyte-containing sheet is the same as conventionally used electrolytic solutions in that both are directed to electrolyte medium, the electrolyte-containing sheet can be easily sandwiched into or removed from between the working electrode and the counter electrode or can be easily carried, since the electrolyte-containing sheet is a sheet-like body, which can be handled separately. As a result, the device structure and the detection procedure can be remarkably simplified. This can be called a significant benefit, in light of the circumstances under which conventional methods of filling an electrolytic solution into between a working electrode and a counter electrode necessitate a complicated mechanism or process, such as a mechanism for feeding the electrolytic solution (for example, a pump, a valve, and a mechanism for controlling them), a mechanism for preventing liquid leakage (for example, a packing), and waste liquid treatment of the electrolytic solution, causing an increase in cost and devise size. In addition, measurement time can be shortened because use of the gel sheet eliminates time for feeding the electrolytic solution and also because the gel sheet can be subjected to measurement immediately only by sandwiching the gel sheet between the working electrode and the counter electrode.

The electrolyte in the present invention is not limited as long as the electrolyte can transfer freely in the hydrous substrate to participate in supply and receipt of electrons among the sensitizing dye, the working electrode and the counter electrode, and various kinds of electrolytes can be used. A preferred electrolyte is a substance which can function as a reducing agent (electron supplier) for supplying electrons to a dye photoexcited by light irradiation. Examples of such substance include sodium iodide (NaI), potassium iodide (KI), calcium iodide (CaI₂), lithium iodide (LiI), ammonium iodide (NH₄I), tetrapropyl ammonium iodide (NPr₄I), sodium thiosulfate (Na₂S₂O₃), sodium sulfite (Na₂SO₃), hydroquinone, K₄[Fe(CN₆)]·₃H₂O, ferrocene-1,1'-dicarboxylic acid, ferrocene carboxylic acid, sodium borohydride (NaBH₄), triethylamine, thiocyanate ammonium, hydrazine (N₂H₄), acetaldehyde (CH₃CHO), N,N,N',N'-tetramethyl-p-phenylenediamine dichloride (TMPD), L-ascorbic acid, sodium tellurite (Na₂TeO₃), iron (II) chloride tetrahydrate (FeCl₂.4H₂O), EDTA, cysteine, triethanolamine, tripropylamine, iodine-containing lithium iodide (I/LiI), tris (2-chloroethyl) phosphate (TCEP), dithiothreitol (DTT), 2-mercaptoethanol, 2-mercaptoethanolamine, thiourea dioxide, (COOH)₂, HCHO, and combinations thereof, more preferably NaI, KI, CaI₂, LiI, NH₄I, tetrapropyl ammonium iodide (NPr₄I), sodium thiosulfate (Na₂S₂O₃), sodium sulfite (Na₂SO₃), and mixtures thereof, further preferably tetrapropyl ammonium iodide (NPr₄I).

### (1) Gel Sheet

According to a preferred aspect of the present invention, the hydrous substrate is preferred to be a gel matrix comprising at least one selected from a natural gel and a synthetic gel, and the electrolyte is preferred to be dispersed in the gel matrix. In this aspect, the electrolyte-containing sheet is configured as a gel sheet. As compared to the case of using an electrolytic solution, use of the gel sheet as the electrolyte medium attains a higher detection current on a sample having the same analyte concentration as well as a concentration dependency of detection current in a wider range of analyte concentration. That is, it is possible to remarkably improve detection sensitivity and accuracy of the photocurrent by using the gel sheet.

According to a preferred aspect of the present invention, it is preferred that the gel sheet has a gel strength of 100 g/cm² or more, more preferably 120 g/cm² or more, furthermore preferably 150 g/cm² or more. With such gel strength, the gel sheet can be easily handled independently, and thus can be easily sandwiched into or removed from between the working electrode and the counter electrode. As a result, the sensor unit structure and the detection procedure can be significantly simplified.

As for configuration of the gel sheet of the present invention, the part of the gel sheet in contact with each electrode is preferably made in the form of a flat plane, in order to secure a sufficient adhesion to the working electrode and the counter electrode. For this reason, in the case where the gel sheet is to be sandwiched into between the working electrode and the counter electrode, the gel sheet is preferably configured to have a uniform thickness in such a manner as not to adversely affect the adhesion. On the other hand, in the case of using an electrode unit in which the working electrode and the counter electrode are patterned on the same plane, at least only one side of the gel sheet in contact with the electrode unit may be made in the form of a flat plane, regardless of thickness or thickness uniformity.

According to a preferred aspect of the present invention, it is preferred that the gel sheet has a thickness from 0.1 to 10 mm, more preferably from 0.5 to 3 mm, furthermore preferably from 1 to 3 mm. Since such thickness makes it easy to attain a gel strength suitable for handling the gel sheet independently, the gel sheet can be easily sandwiched into and removed from between the working electrode and the counter electrode, and can be also carried easily. As a result, the sensor unit structure and the detection procedure can be significantly simplified. Further, the gel sheet having such thickness does not adversely affect the photocurrent measurement.

The gel matrix according to the present invention comprises at least one selected from a natural gel and a synthetic gel, and is not limited as long as the gel exhibits an appropriate strength and adhesion to the electrode. These gels can be formed by gelatification of a gelling agent together with a solvent such as water in the same manner as general gels. Concentration of the gelling agent in the gel matrix does not significantly affect photocurrent measurement, and thus may be determined depending on the kind of the gelling agent in view of strength assurance for enabling independent handling.

According to a preferred aspect of the present invention, it is preferred that the gel matrix contains a natural gel mainly composed of polysaccharide and protein. Preferred examples of such natural gel include gels of agarose, alginic acid, carrageenan, locust bean gum, gellant gum, gelatin, and those mixtures, more preferably a gel of agarose. Preferred additive amount of agarose is 0.5 to 25 % by weight.

According to a preferred aspect of the present invention, it is preferred that the gel matrix comprises a synthetic gel. Preferred examples of the synthetic gel include gels of polyacrylamide, a polyvinyl pyrrolidone, sodium polyacrylate, PVA-added polyacrylamide, polyethylene oxide, N-alkyl-modified (meta)acrylamide derivative, N,N-dimethylacrylamide, N,N-diethylacrylamide, acryloyl morpholine, N-methylacrylamide, N-ethylacrylamide, N-(iso)propylacrylamide, N-butylacrylamide, N-hydroxymethylacrylamide, N-hydroxyethyl acrylamide, N-hydroxypropyl acrylamide, N-hydroxybutylacrylamide, acrylic acid (meta), t-butyl(meta) acrylamide sulfonic acid, sulfopropyl (meta)acrylate, (meta)acrylic acid, itaconic acid, (poly)alkylene glycol (meta)acrylate, hydroxyethyl (meta)acrylate, polyethylene-glycol (meta)acrylate, hydroxypropyl (meta)acrylate, polypropylene-glycol (meta)acrylate, glycerin (meta)acrylate, methylene bis(meta)acrylamide, ethylene bis(meta)acrylamide, (poly)ethylene glycol di(metha)acrylate, (poly)propyleneglycol di(meth)acrylate, glycerin di(meta)acrylate, glycerin tri(meta)acrylate, tetra allyloxy ethane, and those mixtures, more preferably a gel of polyacrylamide.

According to a preferred aspect of the present invention, the gel sheet of the present invention may be prepared (1) in a method comprising adding an electrolyte and a gelling agent to water, dissolving the mixture with heat to form a gel, and then processing the gel to provide a desired sheet shape or (2) in a method comprising forming a gel only with a gelling agent, processing the gel to provide a desired sheet shape, and then immersing the gel in an electrolyte solution to disperse the electrolyte into the gel. In particular, there is a case where the gelling agent does not gelate by mixing, heating, or cooling depending on a combination with an electrolyte used. Even in such a case, the gel sheet can be prepared according to the above (2) method.

### (2) Water-Absorbent Sheet

According to another preferred aspect of the present invention, a hydrous substrate is preferred to be a water-absorbent substrate. In this aspect, the electrolyte-containing sheet is configured as a water-absorbent sheet. When using the water-absorbent sheet as an electrolyte medium, a detection sensitivity and a detection accuracy equivalent to the case of using an electrolytic solution can be obtained. That is, photocurrent can be accurately detected by using the water-absorbent sheet.

According to a preferred aspect of the present invention, it is preferred that the water-absorbent sheet has a water content of 20 % or more, more preferably 30 % or more, further preferably 40 % or more. With such water content, a high photocurrent can be detected when detecting photocurrent, improving detection sensitivity. The water content is determined in accordance with (water content per 1 mm³)/(concentration of water-absorbent substrate). It should be noted that water content herein means a water content of the water-absorbent sheet at the time of detecting photocurrent, and does not have to satisfy the above water content during storage.

As for configuration of the water-absorbent sheet of the present invention, the part of the absorbent sheet in contact with each electrode are preferably made in the form of a flat plane in order to secure a sufficient adhesion to the working electrode and the counter electrode. For this reason, when the water-absorbent sheet is used to be sandwiched into between the working electrode and the counter electrode, the absorbent sheet is preferably configured to have a uniform thickness in such a manner as not to adversely affect the adhesion. On the other hand, in the case of using an electrode unit in which the working electrode and the counter electrode are patterned on the same plane, at least only one side of the absorbent sheet in contact with the electrode unit may be made in the form of a flat plane, regardless of thickness or thickness uniformity.

According to a preferred aspect of the present invention, it is preferred that the water-absorbent sheet has a thickness from 0.01 to 10 mm, more preferably from 0.1 to 3 mm. Since such thickness makes it easy to attain a gel strength suitable for handling the water-absorbent sheet independently, the absorbent sheet can be easily sandwiched into or removed from between the working electrode, and can be also carried easily. As a result, the sensor unit structure and the detection procedure can be significantly simplified. Further, the water-absorbent sheet having such thickness does not adversely affect the photocurrent measurement.

The water-absorbent substrate according to the present invention preferably comprises at least one kind of fiber selected from a natural fiber, such as cotton, hemp, wool, silk and cellrose; a pulp fiber used for a filter paper, paper manufacture and the like; a recycled fiber, such as rayon; a glass fiber used for a filter paper and the like; and a synthetic fiber used in felt, sponge and the like. The kind of the water-absorbent substrate is not limited as long as the absorbent substrate exhibits an appropriate strength, an appropriate water content and an appropriate adhesion to the electrode. The processing method of the fiber used in the water-absorbent substrate in the present invention is not limited to a particular processing method.

According to a preferred aspect of the present invention, preferred examples of the water-absorbent substrate include a filter paper, a membrane filter, a glass filter, and a filter cloth, more preferably a filter paper and a membrane filter.

According to a preferred aspect of the present invention, the electrolyte-containing absorbent sheet of the present invention may be used (1) after being processed to be provided with a desired sheet shape and then being immersed in an aqueous electrolytic solution or (2) by dripping water to the absorbent sheet immediately before use after the absorbent sheet is processed to be provided with a desired sheet shape, immersed in an aqueous electrolytic solution, and then dried.

### Sensor Unit and Measuring Device

With use of the electrolyte-containing sheet of the present invention, it is possible to construct an inexpensive, compact sensor unit or measuring device with a significantly simplified structure. This is because use of the electrolyte-containing sheet eliminates the need for a complicated mechanism or process, such as a mechanism for feeding an electrolytic solution (for example, a pump, a valve and a mechanism for controlling them), a mechanism for preventing liquid leakage (for example, a packing) and waste liquid treatment of the electrolytic solution, which were required in conventional methods conducted by filling an electrolytic solution between a working electrode and a counter electrode.

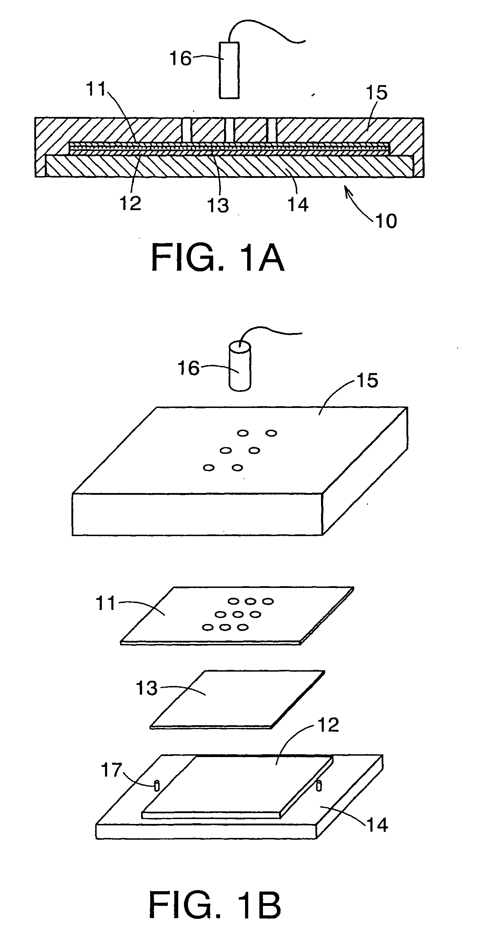

A sensor unit according to a first embodiment of the present invention comprises a working electrode, a counter electrode opposed to the working electrode, and the electrolyte-containing sheet sandwiched between the working electrode and the counter electrode, in which each of the working electrode and the counter electrode has an electrode surface in contact with the electrolyte-containing sheet. That is, the front surface of the working electrode (the side to which an analyte is immobilized) and the conductive surface of the counter electrode (platinum and the like) are placed to face each other so as to be in contact with the electrolyte-containing sheet. Figs. 1A and 1B respectively show a cross-sectional view and an exploded view of a sensor unit according to the first embodiment. In the sensor unit 10 shown in Figs. 1A and 1B, a working electrode 11 is positioned above a counter electrode 12, and an electrolyte-containing sheet 13 is sandwiched between the working electrode 11 and the counter electrode 12. The sensor unit 10 is provided with a support substrate 14 for supporting the counter electrode 12. A pressing member 15 is provided on the top portion of the sensor unit 10 to press down the working electrode 11, the electrolyte-containing sheet 13, and the counter electrode 12 toward the support substrate 14 so as to be in close contact with each other. In the sensor unit of the present invention, the order of components to be stacked is not limited to the illustrated example. The components may be stacked in the reverse order in view of the order shown in Figs. 1A and 1B. In this case, there may be further provided a support substrate for supporting the working electrode and a pressing member for pressing down the counter electrode, the electrolyte-containing sheet and the working electrode toward the support substrate so as to be in close contact with each other. The respective components are arranged horizontally in the illustrated example, but may be arranged in an upright state. The pressing member 15 is preferably provided with an opening or light transmissive portion, through which light is passed for photo-excitation.

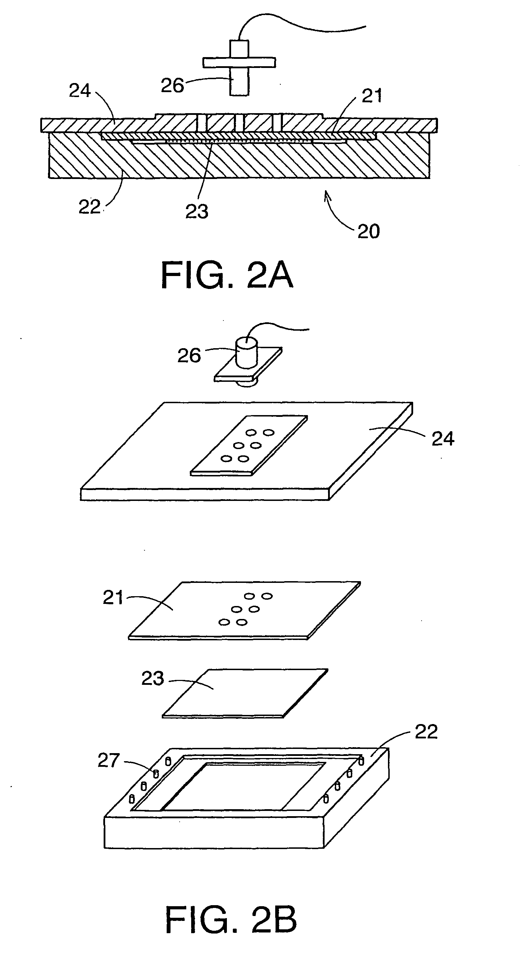

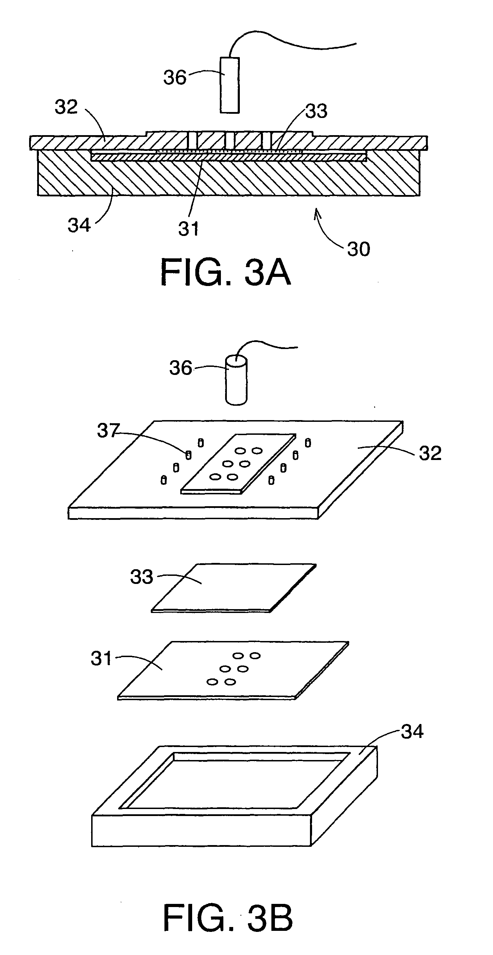

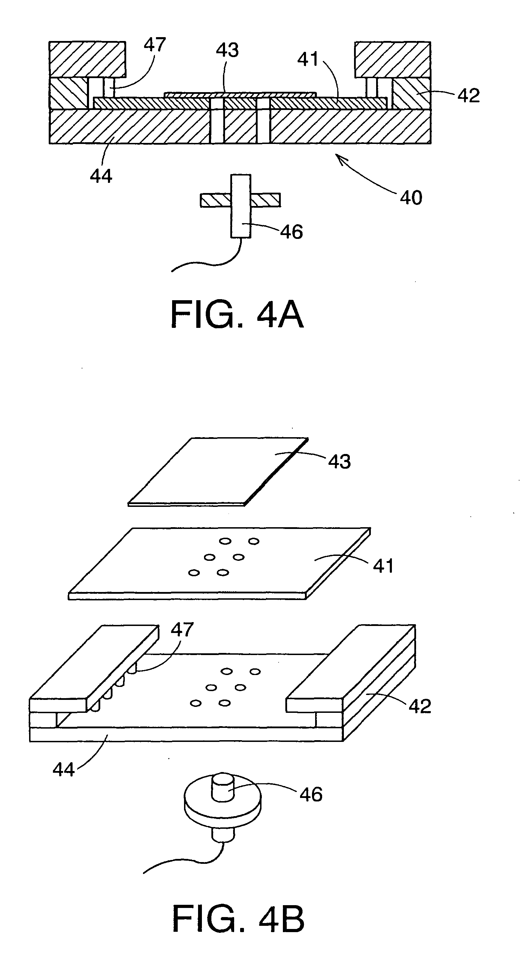

A sensor unit according to the second aspect of the present invention comprises an electrode unit on which a working electrode and a counter electrode are patterned on the same plane and an electrolyte-containing sheet provided in contact with an electrode surface of each of the working electrode and the counter electrode. Figs. 2A-2B to 4A-4B respectively show a cross-sectional view and an exploded view of the sensor unit according to the second embodiment. In the sensor unit 20 shown in Figs. 2A and 2B, an opposing member 22 is provided to be opposed to an electrode unit 21 and a gel sheet 23 is sandwiched between the electrode unit 21 and the opposing member 22. That is, the electrode unit 21 is located on the electrolyte-containing sheet 23 placed on the opposing member 22 in such a manner that the surface of the electrode unit 21 to which an analyte is immobilized faces downward. In the sensor unit 20, there is provided a pressing member 24 for pressing the electrode unit 21 and the electrolyte-containing sheet 23 toward the opposing member 22 so as to be in close contact with each other. On the other hand, in the sensor unit 30 shown in Figs. 3A and 3B, the electrode unit 31 is further provided with a support substrate 34 for supporting the electrode unit 31, so that the opposing member 32 can function as a pressing member for pressing down the electrolyte-containing sheet 33 and the electrode unit 31 toward the support substrate 34 so as to be in close contact with each other. That is, the electrode unit 31 is placed on the support substrate 34 in such a manner that the surface of the electrode unit 31 to which an analyte is immobilized faces upward, and the electrolyte-containing sheet 33 is placed on the electrode unit 31. In the sensor unit of the present invention, the order of the components to be stacked is not limited to the illustrated example. The components may be stacked in the reverse order in view of the order shown in Figs. 2A-2B and 3A-3B so that the upward and downward directions are reversed. In the illustrated example, the respective components are positioned horizontally, but may be positioned in an upright state. The pressing members 24 and 32 are preferably provided with one or more openings or light transmissive portions, through which light is passed for photo-excitation. In the sensor unit 30 shown in Figs. 3A and 3B, since irradiation light passes through the electrolyte-containing sheet, when using an electrolyte with colorability, a light source or an electrolyte concentration is preferably adjusted appropriately so that attenuation of light strength does not cause a problem. On the other hand, in a sensor unit 40 shown in Figs. 4A and 4B, the electrode unit 41 is provided with a support substrate 44 for supporting the electrode unit 41 together with a pressing member 42 for pressing the electrode unit 41 toward the support substrate 44 so as to be in close contact with the support substrate 44. This pressing member 42 is preferably designed to cover only the end portion of the electrode unit 41 or the vicinity thereof to secure a sufficient open portion on the electrode unit 41, rendering it easy to place the electrolyte-containing sheet 43 on the electrode unit 41. It is preferable to use contact probes 47 to configure the part of the pressing member 42 to be in contact with the electrode unit 41. The electrolyte-containing sheet 43 is placed on the electrode unit 41 thus held by the pressing member 42, preferably on the open portion of the electrode unit 41 not covered with the pressing member 42.

In any of the first embodiment and the second embodiment, a light source 16, 26, 36, 46 for applying light to the working electrode and an ammeter (not illustrated) for measuring current flowing between the working electrode and the counter electrode are further provided in the sensor unit 10, 20, 30, 40 to configure a measuring device. It is preferable that the ammeter can detect current with nA level. In such a configuration, light from the light source is applied to the surface of the working electrode. In the sensor units 10 and 40 shown in Figs. 1A-1B and 4A-4B, light from the light source 16, 46 is applied to the back side of the working electrode 11 or the electrode unit 41, and light passes through the transparent working electrode 11 or electrode unit 41 to reach the surface of the working electrode 11 or the electrode unit 41. On the other hand, in the sensor units 20 and 30 shown in Figs. 2A-2B and 3A-3B, light from the light source 26, 36 passes through the openings of the pressing member 24, 32 to reach the surface of the electrode unit 21, 31. The value of the photocurrent generated by photo-excitation of a sensitizing dye with the light which has thus reached the working electrode can be detected by the ammeter. Means for connecting the working electrode and the counter electrode to the ammeter is not limited and may adopt, for example, means for directly connecting lead wires or for connecting with the contact probe 17, 27, 37, 47 as in the illustrated examples. In particular, a contact probe is advantageous for a working electrode which is to be mounted and removed on each measurement since it makes it easy to remove the working electrode.

According to a preferred aspect of the present invention, the light source may be a light source capable of emitting light having different wavelength(s) depending on type of the sensitizing dye. Further, according to another preferred aspect of the present invention, a plurality of light sources may be provided beforehand, and the measuring device may be further provided with a mechanism for switching the plurality of the light sources for irradiation.

According to a preferred aspect of the present invention, it is preferred that an X/Y transfer mechanism (not illustrated) is mounted to the light source and/or the sensor unit and that the light source is configured to emit light while transferring in the X/Y direction above the working electrode for scanning by relatively moving the light source and the sensor unit in the X/Y direction. This enables individual irradiation of analyte-immobilized spots on the working electrode. In particular, in the sensor unit of the present invention, the X/Y transfer of the sensor unit itself can be easily conducted since the structure is simplified because of no necessity of feeding the electrolytic solution.

According to a preferred aspect of the present invention, it is preferred that the X/Y transfer mechanism is configured so that transfer speed, transfer route and the like can be designated by software incorporated into a computer or a device. In this case, it is preferable that the value of the current generated by light irradiation is measured by the ammeter, and the result is sent to a memory in the computer or the device to be stored as data. The photocurrent values thus stored in the memory can be displayed on a display monitor as numeral values or a time line graph representing real-time data. By reading the values of the currents at the times of light non-irradiation and light irradiation from appropriate data points of the obtained data and using the difference of the values of the currents, it is possible to determine the substance concentration or presence/absence of SNPs in a sample. Further, the procedure from the reading of these data to the determination of substance concentration or presence/absence of SNPs (significant difference determination) may be automatically processed on the software.

### Special Detection of Analyte with Use of Photocurrent

As described above, the sensor unit of the present invention is used for special detection of an analyte with use of photocurrent generated by photo-excitation of a sensitizing dye. The method of special detection of an analyte with use of photocurrent generated by photo-excitation of a sensitizing dye will be explained in detail below.

In this method, a sample liquid containing an analyte, a working electrode and a counter electrode are provided. The working electrode used in the present invention has a surface provided with a probe substance capable of bonding specifically to an analyte directly or indirectly. That is, the probe substance may be not only a substance bonding specifically to an analyte in a direct manner, but also a substance capable of bonding specifically to a conjugate obtained by bonding an analyte specifically to a mediator substance such as a receptor protein molecule. Then, the sample liquid is brought into contact with the working electrode under the presence of the sensitizing dye to bond the analyte specifically to the probe substance directly or indirectly. Through this bond, the sensitizing dye is immobilized to the working electrode. The sensitizing dye is a substance capable of releasing electrons toward the working electrode in response to photo-excitation. Either the analyte or the mediator substance may be preliminarily labeled with the sensitizing dye or, in the case of using a sensitizing dye capable of intercalating into the conjugate of the analyte and the probe substance, the sensitizing dye may be simply added to the sample liquid.

After the working electrode and the counter electrode are brought into contact with the electrolyte medium in the sensor unit, light irradiation of the working electrode to photoexcite the sensitizing dye causes electron transfer from the phothoexcited sensitizing dye to the electron receiving substance. By detecting the photocurrent flowing between the working electrode and the counter electrode due to the electron transfer, the analyte can be detected with high sensitivity and accuracy. In addition, the detection current has a strong correlation to concentration of the test sample in the sample liquid. As a result, quantitative measurement can be conducted on the test sample on the basis of the measured amount of electric current or the measured electrical quantity.

### (1) Analyte and Probe Substance

The analyte used in the present invention is not limited and may include various types of substances, as long as it has specific bond properties. If such an analyte is used and a probe substance capable of bonding specifically to the analyte directly or indirectly is supported on the surface of the working electrode, it is possible to detect the analyte by causing it to bind specifically to the probe substance directly or indirectly.

In other words, in the present invention, the analyte and the probe substance may be selected to be able to bond specifically to each other. According to a preferred aspect of the present invention, it is preferred that a substance having specific bond properties is used as an analyte and that a substance bonding specifically to the analyte as a probe substance is supported on the working electrode. This makes it possible to detect the analyte directly by bonding it specifically to the working electrode. Preferred examples of combination of an analyte and a probe substance in this aspect include a combination of a single-stranded nucleic acid and a single-stranded nucleic acid complementary to this nucleic acid, and a combination of an antigen and an antibody.

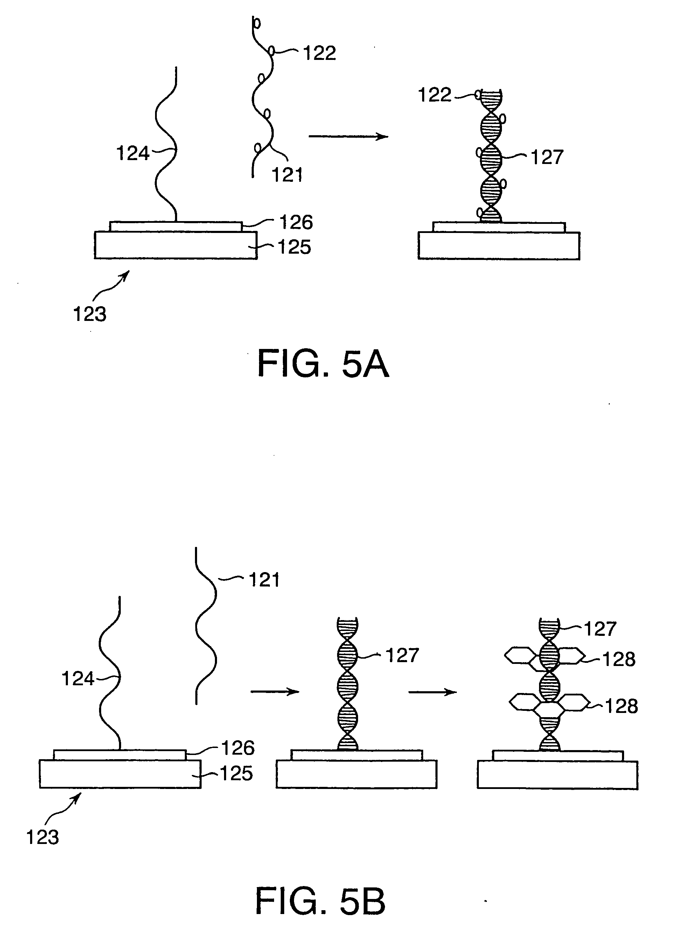

According to a more preferable aspect of the present invention, it is preferred that the analyte is a single-stranded nucleic acid and the probe substance is a single-stranded nucleic acid which is complementary to the nucleic acid of the analyte. It is preferred that the probe substance has a complementary portion of 15bp or more to the nucleic acid. The process of the specific bond of the analyte to the working electrode in this aspect is shown in Figs. 5A and 5B. As shown in Figs. 5A and 5B, a single-stranded nucleic acid 121 of the analyte is hybridized with a complementary single-stranded nucleic acid 124 of the probe substance supported on the working electrode 123 to form a double-stranded nucleic acid 127.

A sample liquid containing the single-stranded nucleic acid as an analyte can be prepared by extracting a nucleic acid from various types of analyte samples containing a nuclide acid, for example, blood such as peripheral venous blood, leukocyte, serum, urine, feces, semen, saliva, cultured cells, and tissue cells such as various organ cells, in accordance with a known method. In this process, the cells in the analyte sample may be destroyed by, for example, externally applying a physical action such as shaking or an ultrasonic wave to the carrier to produce a vibration thereof. Also, a nucleic-acid extraction solvent may be used to release the nucleic acid from the cell. Examples of the nucleic-acid eluting solution include solutions including a surfactant such as SDS, Triton-X and Tween-20; saponin; EDTA; protease; and the like. In the case of using these solutions to elute the nucleic acid, the reaction can be promoted by conducting incubation at 37°C.

According to a preferred aspect of the present invention, it is preferred that, if the content of the gene as an analyte is extremely low, the detection is conducted after the gene has been amplified in accordance with a well-known method. A typical method for amplifying gene would be a method using enzymes such as a polymerase chain reaction (PCR). Examples of the enzyme used in the gene amplifying method include DNA-dependent DNA polymerase such as DNA polymerase and Taq polymerase; DNA-dependent RNA polymerase such as RNA polymerase I; and RNA-dependent RNA polymerase such as Qβ replicase. A preferable method is the PCR technique using Taq polymerase in that the amplification can be continuously repeated simply by adjusting the temperature.

According to a preferred aspect of the present invention, the nucleic acid may be labeled specifically with the sensitizing dye during the above amplifying process. Typically, this can be conducted by allowing DNA to incorporate aminoallyl-modified dUTP. This molecule is captured at the same degree of efficiency as that of unmodified dUTP. In the subsequent coupling stage, the fluorescent dye activated by N-hydroxysuccinimide reacts specifically with the modified dUTP, resulting in an analyte uniformly labeled with the sensitizing dye.

According to a preferred aspect of the present invention, a single-stranded nucleic acid may be prepared by thermally denaturing a crude extract of a nucleic acid obtained in the above manner or a purified nucleic-acid solution at a temperature of 90 to 98 °C, preferably 95 °C or higher.

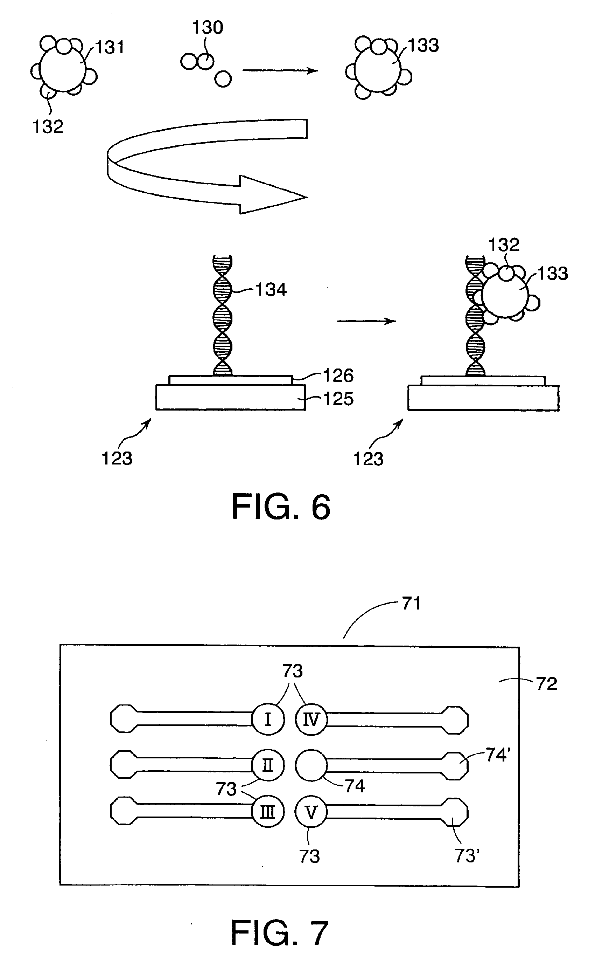

In the present invention, an analyte and a probe substance may be bonded specifically to each other in an indirect manner. That is, according to a preferred aspect of the present invention, it is preferable that a substance having specific bond properties is used as an analyte, that a substance bonding specifically to the analyte is coexisted as a mediator substance, and that a substance capable of bonding specifically to the mediator substance is used as a probe substance and supported on the working electrode. As a result, even if the analyte is a substance which is incapable of bonding specifically to the probe substance, the analyte can be detected by being bonded specifically to the working electrode in an indirect manner via the mediator substance. Preferred examples of combination of an analyte, a mediator substance and a probe substance in this aspect include a combination of a ligand, a receptor protein molecule capable of receiving the ligand, and a double-stranded nucleic acid capable of bonding specifically to the receptor protein molecule. Preferred examples of the ligand include an endocrine disruptor (environmental hormone). The endocrine disruptor is a substance that can bond to DNA via a receptor protein molecule and affecting the gene expression to cause toxicity. However, according to the method of the present invention, it is possible to simply and easily monitor the bond properties of the protein such as a receptor to the DNA, which are provided by the analyte. The process of the specific bond of the analyte to the working electrode in this aspect is shown in Fig. 6. As shown in Fig. 6, a ligand 130 as an analyte binds specifically to a receptor protein molecule 131 as a mediator substance. Then, the receptor protein molecule 133, to which the ligand is bonded, binds specifically to a double-stranded nucleic acid 134 as a probe substance.

According to a preferred aspect of the present invention, the analyte may comprise two or more kinds of substances. According to the method of the present invention, a plurality of sensitizing dyes are used to apply light having different excitation wavelength(s) for each sensitizing dye. Therefore, it is possible to detect the plural kinds of the analytes individually.

### (2) Sensitizing Dye

According to the present invention, an analyte is bonded specifically to a probe substance in a direct or indirect manner under the coexistence of a sensitizing dye to immobilize the sensitizing dye onto the working electrode via the bonding, for the purpose of detecting presence of an analyte with photocurrent. For this purpose, in the present invention, the analyte 121 or the mediator substance 131 can be preliminarily labeled with sensitizing dyes 122, 132 as shown in Fig. 5A and Fig. 6. Also, when using a sensitizing dye 128 which is capable of intercalating into the conjugate 127 of the analyte and the probe substance as shown in Fig. 5B (for example, a double-stranded nucleic acid after the hybridization), the sensitizing dye can be immobilized onto the probe substance by adding the sensitizing dye to the sample liquid.

The sensitizing dye employed in the present invention may be a substance which can release electrons to the working electrode in response to photo-excitation, can transit to a photoexcited state upon light irradiation by a light source, and can adopt an electron state capable of injecting electrons from a photoexcited state to the working electrode. Accordingly, since the sensitizing dye to be used merely needs to be capable of establishing the above electron state in relation with the working electrode, particularly with the electron receiving layer, various types of sensitizing dyes can be used. This eliminates the need of using an expensive dye.

Specific examples of the sensitizing dye include a metal complex and an organic dye. Preferred examples of the metal complex include a metal phthalocyanine such as copper phthalocyanine and titanyl phthalocyanine; chlorophyll or its derivative; and complexes of hemin, ruthenium described in Japanese Patent Laid-Open Publication No. H1-220380 and Published Japanese Translation of PCT International Publication No. H5-504023, osmium, iron and zinc (for example, cis-dicyanate-bis(2,2'-bipyridyl-4,4'-dicarboxylate)ruthenium (II)). Preferred examples of the organic dye include metal-free phthalocyanine, 9-phenylxanthene dye, cyanine dye, metallocyanine dye, xanthene dye, triphenylmethane dye, acridine dye, oxazine dye, coumarin dye, merocyanine dye, rhodacyanine dye, polymethine dye, indigo dye and the like.

Preferred examples of the sensitizing dye capable of intercalating into a double-stranded nucleic acid include acridine orange and ethidium bromide. In the case of using such a sensitizing dye, a double-stranded nucleic acid labeled with the sensitizing dye is formed by merely adding the sensitizing dye to the sample liquid after hybridization, eliminating the need for preliminarily labeling a single-stranded nucleic acid.

### (3) Working Electrode and Manufacturing

The working electrode employed in the present invention is an electrode having a surface on which the probe substance is provided, which is capable of receiving electrons released from the sensitizing dye immobilized via the probe substance in response to photo-excitation. Accordingly, the configuration and the materials of the working electrode are not limited as long as the electron transition occurs between the working electrode and the sensitizing dye to be used, and various configurations and various materials may be employed.

According to a preferred aspect of the present invention, it is preferred that the working electrode comprises an electron receiving layer comprising an electron receiving substance capable of receiving the electrons released from the sensitizing dye in response to photo-excitation, and the probe substance is provided on the surface of the electron receiving layer. Also, according to a more preferred aspect of the present invention, it is preferable that the working electrode further comprises a conductive substrate, and the electron receiving layer is formed on the conductive substrate. The electrode in this aspect is illustrated in Figs. 5A-5B and 6. The working electrode 123 illustrated in Fig. 5 and Fig. 6 comprises a conductive substrate 125, and an electron receiving layer 126 formed on the conductive substrate 125 and comprising an electron receiving substance. A probe substance is supported on the surface of the electron receiving layer 126.

The electron receiving layer in the present invention comprises an electron receiving substance capable of receiving the electrons released from the sensitizing dye immobilized via the probe substance in response to photo-excitation. In other words, the electron receiving substance may be a substance capable of having an energy level at which electrons can be injected from the labeling dye which is photoexcited. In this case, the energy level (A) at which electrons can be injected from the photoexcited labeling dye means, for example, a conduction band (CB) when a semiconductor is used as an electron receiving material, a Fermi level when a metal is used as the electron receiving substance, and a lowest unoccupied molecular orbital (LUMO) when an organic substance or a molecular inorganic substance such as C60 is used as the electron receiving material. That is, the electron receiving substance employed in the present invention needs to have a level A that is baser than the energy level of the LUMO of the sensitizing dye, in other words, an energy level lower than that of the LUMO of the sensitizing dye.

Preferred examples of the electron receiving substance include element semiconductor of silicon, germanium or the like; oxide semiconductors of titanium, tin, zinc, iron, tungsten, zirconium, hafnium, strontium, indium, cerium, yttrium, lanthanum, vanadium, niobium, tantalum or the like; perovskite semiconductors of strontium titanate, calcium titanate, sodium titanate, barium titanate, potassium niobate and the like; sulfide semiconductors of cadmium, zinc, lead, silver, stibium and bismuth; selenide semiconductors of cadmium or lead; a telluride semiconductor of cadmium; phosphide semiconductors of zinc, gallium, indium, cadmium or the like; and compound semiconductors of gallium arsenide, copper-indium-selenide or copper-indium-sulfide; metals such as gold, platinum, silver, copper, aluminum, rhodium, indium, and nickel; organic polymers such as polythiophene, polyaniline, polyacethylene, and polypyrole; and molecular inorganic substances such as C60 and C70, more preferably silicon, TiO₂, SnO₂, Fe₂O₃, WO₃, ZnO, Nb₂O₅, strontium titanate, indium oxide, CdS, ZnS, PbS, Bi₂S₃, CdSe, CdTe, GaP, InP, GaAs, CuInS₂, CuInSe, and C60, further preferably TiO₂, ZnO, SnO₂, Fe₂O₃, WO₃, Nb₂O₅, strontium titanate, CdS, PbS, CdSe, InP, GaAs, CuInS₂, and CuInSe₂, most preferably TiO₂. The above-described semiconductors may be either an intrinsic semiconductor or an impurity semiconductor.

According to a preferred aspect of the present invention, it is preferred that the electron receiving substance is a semiconductor, more preferably an oxide semiconductor, further preferably a metal oxide semiconductor, most preferably an n-type metal oxide semiconductor. According to this aspect, electrons can be efficiently taken from a sensitizing dye with use of the band gap of a semiconductor. A working electrode with a large surface area can be prepared by using a semiconductor having a structure of a porous material or an irregular surface, and thus can increase the probe immobilization amount.

According to a preferred aspect of the present invention, it is preferred that the potential of the conductive band of the semiconductor is lower than the potential of LUMO of the sensitizing dye, more preferably the potential of meeting a relation of (LUMO of a sensitizing dye) > (conductive band of a semiconductor) > (oxidation-reduction potential of an electrolyte) > (HOMO of a sensitizing dye). In consequence, it is possible to take out electrons efficiently.

According to a preferred aspect of the present invention, when the electron receiving layer comprises a semiconductor, a layer surface of the electron receiving layer may be cationization-processed. By the cationization process, the probe substance (DNA, protein, etc.) can be adsorbed to the electron receiving layer at high efficiency. The cationization can be performed, for example, by allowing a silane coupling agent such as an aminosilane, a cation polymer, or a quaternary ammonium compound to act on the electron receiving layer surface.

According to another preferred aspect of the present invention, indium-tin oxide (ITO) or fluorine-doped tin oxide (FTO) may be used as an electron receiving substance. Since ITO and FTO function not only as an electron receiving layer but also as a conductive substrate, the use of these materials allows the electron receiving layer alone to function as a working electrode without using a conductive substrate.

When a semiconductor or a metal is used as an electron receiving substance, the semiconductor or the metal may be either a single crystal or polycrystal, preferably a polycrystal, more preferably a polycrystal having porosity rather than density. In this way, the specific surface area can be increased so as to adsorb a larger amount of the analyte and the sensitizing dye, rendering it possible to detect the analyte with higher sensitivity and accuracy. In view of this, according to a preferred aspect of the present invention, the electron receiving layer has porosity, in which each pore preferably has a diameter of 3 nm to 1000 nm, more preferably 10 nm to 100 nm.

According to a preferred aspect of the present invention, the surface area of the electron receiving layer located on the conductive substrate is preferably ten or more times, more preferably 100 or more times that of the projected area. The upper limit of the surface area is not particularly limited, but will be typically on the order of 1000 times. Fine particles of the electron receiving substance constituting the electron receiving layer have an average particle diameter ranging preferably from 5 to 200 nm, more preferably from 8 to 100 nm, and further preferably from 20 to 60 nm, as primary particles, provided that the projected area is converted into a circle. Average particle diameter of the fine particles (secondary particles) of the electron receiving substance in the dispersion ranges preferably from 0.01 to 100 µm. For the purpose of scattering the incoming light to improve light capturing rate, the electron receiving layer may be formed, for example, by additionally using fine particles of the electron receiving substance having a greater particle diameter of approximately 300 nm.

According to a preferred aspect of the present invention, it is preferred that the working electrode further comprises a conductive substrate, and the electron receiving layer is provided on the conductive substrate. The conductive substrate usable in the present invention may be not only one having a support which itself has conductivity as a metal such as titan, but also one having a conductive layer provided on the surface of a glass or plastic support. When a conductive substrate having a conductive layer is used, the electron receiving layer is formed on the conductive layer. Examples of conductive materials constituting the conductive layer include metal such as platinum, gold, silver, copper, aluminum, rhodium and indium; conductive ceramics such as carbon, carbide and nitride; and conductive metallic oxide such as indium-tin oxide, fluorine-doped tin oxide, antimony-doped tin oxide, gallium-doped zinc oxide and aluminum-doped zinc oxide, preferably indium-tin oxide (ITO) and fluorine-doped tin oxide (FTO). However, as described above, when the electron receiving layer itself functions as a conductive substrate, the conductive substrate may be omitted. Also, in the present invention, the conductive substrate is not limited as long as the material can ensure conductivity, and includes a thin-film-shaped or spot-shaped conductive material layer without having in itself the strength required as a support.

According to a preferred aspect of the present invention, it is preferred that the conductive substrate has a substantial transparency, specifically a light transmittance of 10% or more, more preferably 50 % or more, further preferably 70% or more. Also, according to a preferred aspect of the present invention, it is preferred that the conductive material layer has a thickness of 0.02 to 10 µm. Further, according to a preferred aspect of the present invention, it is preferred that the conductive substrate has an electrical surface resistance of 100 Ω/cm² or less, more preferably 40 Ω/cm² or less. The lower limit of the surface resistance of the conductive substrate is not particularly limited, but would be typically approximately 0.1 Ω/cm².

Examples of the preferred method of providing the electron receiving layer on the conductive substrate include a method in which a conductive support is coated with a fluid dispersion or colloid solution of an electron receiving substance; a method in which a coating of a precursor to semiconductor fine-particles is applied to an conductive support, and then is hydrolyzed by the moisture in the air to form a fine-particle film (sol-gel process); sputtering technique; CVD technique; PVD technique; and vapor-deposition technique. Examples of the method of producing the fluid dispersion of semiconductor fine-particles as the electron receiving substance include, in addition to the above-described sol-gel process, a method in which the particles are ground in a mortar; a method in which the particles are dispersed while being crushed using a mill; or a method in which fine-particles are precipitated in a solvent during synthesizing a semiconductor and then are used as they are. Examples of the dispersion medium used in this method include water and various organic solvents (for example, methanol, ethanol, isopropyl alcohol, dichloromethane, acetone, acetonitrile, ethyl acetate and the like). In the dispersing process, a polymer, a surfactant, an acid, a chelating agent or the like may be used as a dispersing agent, if necessary.

Preferred examples of the method of applying the fluid dispersion or colloid solution for the electron receiving substance include roller coating and dipping coating as an application system; air-knife coating and blade coating as a metering system; wire-bar coating disclosed in Japanese Patent Publication No. S58-4589, slide hopper coating, extrusion coating, curtain coating, spin coating and spray coating described in U.S. Patent No. 2681294, U.S. Patent No. 2761419, U.S. Patent No. 2761791 and the like, as a system capable of conducting application and metering at the same part,.

According to a preferred aspect of the present invention, when the electron receiving layer comprises semiconductor fine-particles, the film thickness of the electron receiving layer is preferably from 0.1 to 200 µm, more preferably from 0.1 to 100 µm, further preferably from 1 to 30 µm, and most preferably from 2 to 25 µm. In this way, it is possible to increase the amounts of the probe substance and the sensitizing dye immobilized thereto per unit project area so as to increase the amount of photocurrent flow, and to reduce the loss of electrons generated by charge recombination. Also, the coating amount of the semiconductor fine-particles per m² on the conductive substrate is preferably from 0.5 to 400 g, more preferably from 5 to 100 g.

According to a preferred aspect of the present invention, when the electron receiving substance comprises indium-tin oxide (ITO) or fluorine-doped tin oxide (FTO), the film thickness of the electron receiving layer is preferably 1 nm or more, more preferably from 10 nm to 1 µm.

According to a preferred aspect of the present invention, it is preferred to conduct heating treatment after the conductive substrate is coated with the semiconductor fine-particles. This enables the particles to come into electrical contact with each other, improving coating strength and adhesion properties to the support. The temperature of the heating treatment is preferably from 40 to 700 °C, more preferably from 100 to 600 °C. A preferable time period of the heating treatment is from approximately 10 minutes to approximately 10 hours.

According to another preferred aspect of the present invention, it is preferred that, when using a conductive substrate having a low melting point or softening point such as a polymer film, the film is formed by a method not using high-temperature treatment, in order to prevent deterioration by heat. Examples of such a method for forming a film include pressing, low-temperature heating, electron-beam irradiation, microwave irradiation, electrophoresis, sputtering, CVD, PVD, vapor deposition, and the like.

The probe substance is supported on the surface of the electron receiving layer of the working electrode thus prepared. The probe substance may be supported on the working electrode in accordance with well-known methods. According to a preferred aspect of the present invention, when using a single-stranded nucleic acid as a probe substance, an oxidized layer may be formed on the surface of the working electrode, and then the nucleic-acid probe and the working electrode may be combined via the oxidized layer in between. At this point, the immobilization of the nucleic-acid probe to the working electrode can be achieved by introducing a functional group to an end of the nucleic acid. As a result, the nucleic-acid probe, to which the functional group is introduced, can be directly immobilized on a carrier by the immobilization reaction. The introduction of the functional group to the nucleic acid end can be achieved with use of an enzyme reaction or a DNA synthesizer. Examples of enzymes used in the enzyme reaction include terminal deoxynucleotidyl transferase, poly(A)polymerase, polynucleotide kinase, DNA polymerase, polynucleotide adenyltransferase and RNA ligase. Also, the functional group can be introduced by polymerase chain reaction (PCR technique), nick translation or random primer technique. The functional group may be introduced to any part of the nucleic acid, such as 3'-end, 5'-end or a random position.

According to a preferred aspect of the present invention, amine, carboxylic acid, sulfonic acid, thiol, hydroxyl group, phosphoric acid, and the like can be preferably used as a functional group for immobilizing the nucleic-acid probe to the working electrode. In addition, according to a preferred aspect of the present invention, it is possible to use a material for forming cross-link between the working electrode and the nucleic-acid probe to immobilize the nucleic-acid probe tightly to the working electrode. Preferred examples of such cross-linking material include a silane coupling agent, a titanate coupling agent and a conductive polymer such as polythiophene, polyacethylene, polypyrole and polyaniline.

According to a preferred aspect of the present invention, it is possible to conduct immobilization of the nucleic-acid probe in a simpler manner called physical adsorption. The physical adsorption of the nucleic-acid probe to the electrode surface is carried out, for example, in the following manner. First, the electrode surface is cleaned with distilled water and an alcohol using an ultrasonic cleaner. Then, the electrode is inserted into a buffer solution containing a nucleic-acid probe to cause the nucleic-acid probe to be adsorbed onto the surface of the carrier.

In addition, after the adsorption of the nucleic-acid probe, a blocking agent may be added in order to suppress non-specific adsorption. A blocking agent which can be used for this purpose is not limited as long as it is a substance which can block a site of the electron receiving layer surface with no nucleic-acid probe adsorbed and can be adsorbed to the electron receiving substance by chemical adsorption, physical adsorption or the like. The blocking agent is preferably a substance having a functional group which can be adsorbed through chemical bond. For example, preferred examples of the blocking agent when titanium oxide is used as the electron receiving layer include a substance having a functional group adsorbable to titanium oxide, such as carboxylic group, phosphoric group, sulfonic group, hydroxyl group, amino group, pyridyl group, amide and the like.

According to a preferred aspect of the present invention, it is preferred that the probe substance is divided and supported on each of a plurality of regions isolated from each other on the working electrode, and light from the light source is preferably irradiated individually to each region. This makes it possible to measure a plurality of samples on a single working electrode, which in turn enables integration of a DNA chip and the like possible. According to a preferred aspect of the present invention, it is preferred that the working electrode is patterned with a plurality of mutually isolated regions on which the probe substance is supported, and the detection and quantitative determination of the analytes are continuously performed on the samples in the respective regions by a single operating action while scanning the regions with light emitted from the light source.

According to a more preferred aspect of the present invention, a plurality of the kinds of probe substances may be supported on each of the plurality of the regions isolated from each other on the working electrode. This makes it possible to simultaneously measure a large number of samples, equal to the number made by multiplying the number of regions by the number of kinds of probe substances in each region.

According to a more preferred aspect of the present invention, different probe substances may be supported in each region of the plurality of the regions isolated from each other on the working electrode. Since this makes it possible to support the number of kinds of probe substances corresponding to the number of isolated regions, simultaneous measurement can be conducted on a large number of kinds of analytes. This aspect can be preferably used for multiplex analysis of single nucleotide polymorphisms (SNPs) since an analysis of the analyte differing in each region is possible to conduct.

### (4) Counter Electrode

The counter electrode employed in the present invention is not particularly limited, as long as an electric current flows between the counter electrode and the working electrode when the counter electrode is brought into contact with an electrolyte medium. Glass, plastic, ceramics, and the like on which metal or conductive oxide is vapor-deposited may be used. In addition, a technique such as vapor deposition or sputtering can be used to deposit a metal thin-film as a counter electrode so as to have a thickness of 5 µm or less, preferably 3 nm to 3 µm. Preferable examples of the material which can be employed for a counter electrode include platinum, gold, palladium, nickel, carbon, a conductive polymer such as polythiophene, a conductive ceramic such as oxide, carbide and nitride, more preferablly platinum and carbon, further preferably platinum. These materials can be made in the form of a thin film in the same manner as that for the electron receiving layer.

### (5) Electrode Unit

According to a preferred aspect of the present invention, the electrode unit in which the working electrode and the counter electrode are patterned on the same plane may be used. A preferred electrode unit includes an insulating substrate, a working electrode locally provided on the insulating substrate and provided with an electron receiving layer containing an electron receiving substance capable of receiving electrons released from the sensitizing dye in response to photo-excitation, and a counter electrode located to be spaced from the working electrode on the same plane as the working electrode on the insulating substrate. An example of such an electrode unit is shown in Fig. 7. An electrode unit 71 shown in Fig. 7 is provided with an insulating substrate 72, a working electrode 73, and a counter electrode 74. The insulating substrate 72 is a substrate having insulation properties to prevent shortcut between the working electrode 73 and the counter electrode 74. The working electrode 73 is locally provided on the insulating substrate 72, and is provided with the electron receiving layer containing the electron receiving substance capable of receiving electrons released from the sensitizing dye in response to photo-excitation. The counter electrode 74 is located to be spaced from the working electrode 73 on the same plane as the working electrode 73 on the insulating substrate 72. Lead wires 73.' and 74' are provided to extend from each of the working electrode 73 and the counter electrode 74, respectively.

In this way, the electrode unit is an integrated electrode member provided with the working electrode and the counter electrode on the same plane. By using this electrode unit, degree of freedom in design and material selection of the sensor unit is remarkably increased, largely improving productivity, performance, usability of the sensor unit. That is, since the electrode unit according to the present invention is the integrated electrode member and has no necessity of locating the two electrodes to be opposed to each other, it is easy to adopt a construction in which the light source faces the surface of the electrode unit. This enables a working electrode to be configured with not only a transparent material but also an opaque material such as ceramics or plastics, and thus increase degree of freedom in selection of an electrode material. In addition, direct irradiation onto the working electrode surface from the light source makes it possible to eliminate loss of light due to transmittance of the transparent electrode material that occurs when irradiation is conducted from the electrode backside and thus to expect a more accurate measurement. Further, since the electrode unit according to the present invention is the integrated electrode member, it is possible to form the working electrode, the counter electrode and the lead wire by a conductive patterning of one process, thus improving productivity of the electrode. In addition, general materials such as transparent plastic and glass can be used as a material facing the electrode unit since this material does not require conductivity, while also improving productivity of the cell.

### (6) Measuring Method

In the measuring method using the sensor unit of the present invention, the sample liquid is brought into contact with the working electrode under the presence of the sensitizing dye to bind the analyte specifically to the probe substance in a direct or indirect manner. By this bond, the sensitizing dye is immobilized on the working electrode.

According to a preferred aspect of the present invention, when a single-stranded nucleic acid preliminarily labeled with the sensitizing dye is an analyte, it is possible to initiate hybridization reaction between the single-stranded nucleic acid and another single-stranded nucleic acid which is a probe substance. A preferable temperature for the hybridization reaction ranges from 37 to 72 °C, but the optimum temperature differs depending on base sequence of the probe used, length thereof and the like.

According to another preferred aspect of the present invention, when using a sensitizing dye capable of intercalating into a conjugate of the analyte and the probe substance (e.g., a double-stranded nucleic acid after hybridization), the conjugate can be labeled specifically with the sensitizing dye by adding the sensitizing dye to the sample liquid.

The working electrode to which the analyte is thus immobilized with the sensitizing dye is brought into contact with an electrolytic solution together with the counter electrode. The working electrode is then irradiated with light to photoexcite the sensitizing dye, and the photocurrent flowing between the working electrode and the counter electrode is detected which results from the electron transfer from the photoexcited sensitizing dye to the working electrode. As the sensor unit in this case, the sensor unit using the gel sheet of the present invention is used.

According to a preferred aspect of the present invention, when two or more kinds of sensitizing dyes which are capable of being respectively excited by different wavelengths are used to detect a plurality of kinds of analytes, irradiation of light with a specific wavelength through a wavelength selecting means from the light source makes it possible to excite individually the plurality of dyes. Examples of the wavelength selecting means used include a spectroscope, a colored glass filter, an interference filter, a band-pass filter and the like. It is possible to use a plurality of light sources which are capable of emitting light of different wavelengths depending on the kinds of sensitizing dyes. As examples of a preferable light source in this case, an LED or laser light, from which light of a specific wavelength is emitted, may by used. In order to efficiently apply light to the working electrode, quartz, glass or a liquid light guide may be used to guide the light.

The photocurrent flowing in the system by the irradiation of light is measured by the electric-current meter. In this way, the analyte is detected. The current value at this point reflects the amount of sensitizing dye trapped on the working electrode. For example, when the analyte is a nucleic acid, the amount of double-strand formed between complementary nucleic acids is reflected as the current value. Accordingly, the analyte can be quantitatively determined from the obtained current value. In consequence, according to a preferred aspect of the present invention, the electric-current meter further comprises means for calculating the concentration of the analyte in the sample liquid from the amount of the electric-current or electric quantity thus obtained.

According to a preferred aspect of the present invention, in the step of detecting photocurrent, the current value may be measured, and the concentration of the analyte in the sample liquid may be calculated from the obtained amount of the electric-current or electric quantity. This calculation for the analyte concentration can be performed by comparing a pre-created calibration curve of analyte concentration versus amount of the electric current or electric quantity, with the measured amount of electric current or electric quantity. In the method of the present invention, since the amount of the sensitizing dye trapped on the working electrode is reflected in the current value, the exact current value corresponding to the analyte concentration is obtained, rendering the method suitable for quantitative measurement.

According to another preferred aspect of the present invention, it is possible to use an analyte pre-labeled with the sensitizing dye as a competitive substance to quantitatively determine a second analyte which is not labeled with the sensitizing dye and is capable of bonding specifically to a probe substance. The second analyte preferably has properties of more easily bonding specifically to the probe substance than the labeled analyte. If these two kinds of analytes compete with each other to bond specifically to the probe substance, there is obtained a correlation between the detected current value and the concentration of the second analyte. That is, since the number of competitive substances bonded specifically to the probe substance is reduced as the number of second analytes which are not labeled with dye increases, there can be obtained a calibration curve in which the detected current value is reduced as the concentration of the second analyte increases. As a result, it is possible to detect and quantitatively determine the second analyte which is not labeled with the sensitizing dye.

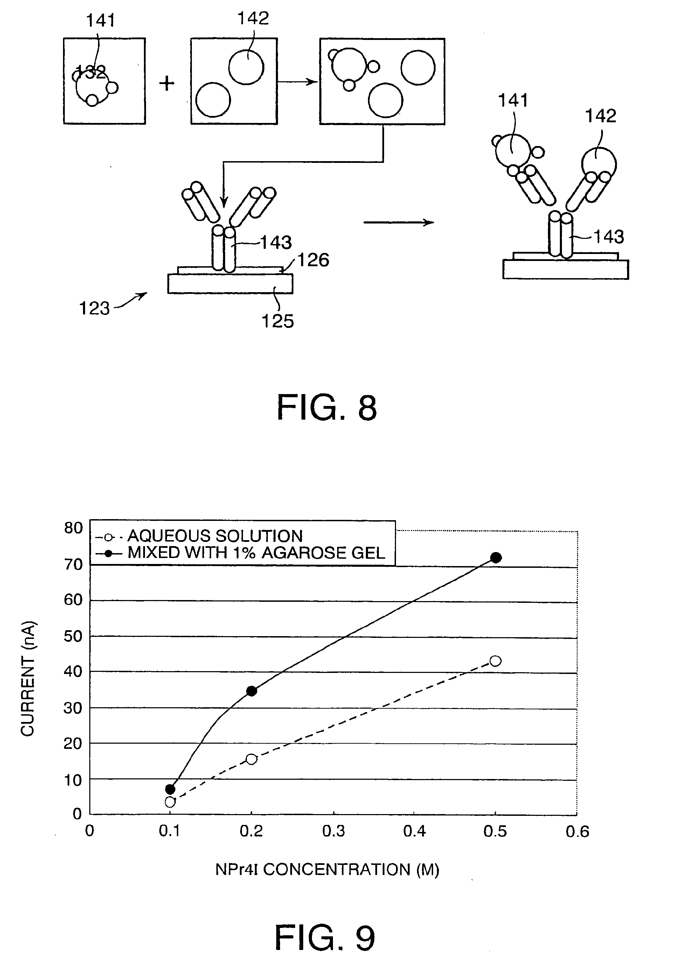

According to a more preferred aspect of the present invention, it is preferred that the analyte and the second analyte are antigens and the probe substance is an antibody. The process of immobilizing the analyte and the second analyte to the probe substance in this aspect is illustrated in Fig. 8. As shown in Fig. 8, an antigen 141 labeled with a sensitizing dye and an antigen 142 not labeled with the dye compete to bond specifically to an antibody 143. Accordingly, as the number of dye-unlabeled antigens 142 increases, the number of dye-labeled antigens 143 bonded specifically to the antibody decreases. It is therefore possible to obtain a calibration curve in which the detected current value is reduced as the concentration of the second analyte increases.

### EXAMPLES

### Example A1: Photocurrent Measurement Using Gel Sheet

### (1) Preparation of Dye-labeled, DNA-immobilized Working Electrode

A fluorine-doped tin oxide (F-SnO₂:FTO) coated glass (produced by AI Special Glass Company, U-film, sheet resistance: 12Ω/□, and configuration of 50 mm × 26 mm) was provided as a glass substrate for working electrode. This glass substrate was subjected to ultrasonic cleaning in acetone for 15 minutes and subsequently to ultrasonic cleaning in ultra-pure water for 15 minutes to remove contaminant and residual organic substance. The glass substrate was shaken for 15 minutes in 5 M aqueous sodium hydroxide. The glass substrate was then shaken for 5 minutes in ultra-pure water, and this step was repeated three times while exchanging the water each time, in order to remove sodium hydroxide. The glass substrate was taken out, and air was blown on the glass substrate to blow away the residual water. The glass substrate was then immersed in anhydrous methanol for hydroextraction.

3-aminopropyltrimethoxysilane (APTMS) was added to a solvent comprising 95 % methanol and 5 % ultra-pure water to bring the APTMS concentration to 2 % by volume, and the mixture was stirred for 5 minutes at room temperature to prepare a solution to be used for coupling treatment. The above glass substrate was immersed in the coupling treating solution and then slowly shaken for 15 minutes. The glass substrate was then taken out and subjected to 3 sets of the process of shaking the glass substrate approximately 10 times in methanol for removing the surplus coupling treating solution, while exchanging the methanol on each set. The glass substrate was kept at 110 °C for 30 minutes to bond the coupling agent to the glass substrate. After cooling the glass substrate at room temperature, an adhesive seal (thickness: 0.5 mm) having 9 spots of openings with a diameter of 3 mm was placed on and brought into close contact with the glass substrate. Subsequently, after rhodamine-labeled ssDNA (25mer) prepared to have a concentration of 100 nM was retained at a temperature of 95 °C for 10 minutes, the DNA was immediately transferred onto ice and maintained for 10 minutes to denature the DNA. This denatured DNA was then filled into the 9 openings in an amount of 5 µ1 on each opening on the glass, and the solvent was evaporated through retention at 95 °C for 10 minutes. Thereafter, a UV cross-linker (UVP Corporation, CL-1000 model) was used to irradiate the glass substrate with 120 mJ of ultraviolet light to immobilize the label ssDNA on the glass substrate. The seal was then peeled off from the glass substrate. The glass substrate was subjected to 3 sets of the processes of being shaken for 15 minutes in 0.2 % SDS solution, and was rinsed while exchanging the ultra pure water three times. The glass substrate was immersed in boiling water for 2 minutes, taken out, and then aired to blow away the residual water. The glass substrate was then immersed in anhydrous ethanol at 4 °C for one minute for hydroextraction, and then aired to blow away the residual ethanol. In this way, the dye-labeled, DNA-immobilized working electrode was obtained.

### (2) Preparation of Gel Sheet

An aqueous solution containing tetrapropyl ammonium iodide (NPr4I) of 0.1 M, 0.2 M, and 0.5 M was prepared. Agarose of a final concentration of 1% (agarose standard Low-m for cataphoresis, BIO-Rad Co.) was added to this aqueous solution, and was heated for 20 minutes at 121 °C in an autoclave to dissolve agarose. The liquid in which the agarose was dissolved was flown into between two glass plates having a packing with a thickness of 1.0 mm between the glass plates, and was then allowed to cool and solidified at room temperature to form a gel sheet. The obtained gel sheet was processed to have a size suitable for photocurrent measurement by cutting the obtained gel sheet with a cutter to form an appropriate dimension.

### (3) Photocurrent Measurement

### (i) Measurement Using Gel Sheet

The dye-labeled, DNA-immobilized working electrode prepared in the above (1) and a counter electrode having a glass plate, on which platinum was vapor-deposited, were provided. The gel sheet prepared in the above (2) was sandwiched between both the electrodes to be in close contact with each other. At this time, both the electrodes were arranged so that the surface of the working electrode to which ssDNA was immobilized could face the platinum-deposited surface of the counter electrode. In a state where both the electrodes were connected to an electrochemical analyzer, the working electrode was irradiated with light from a laser source (green laser having output of 60 mW, irradiation region diameter of 1 mm, and wavelength of 530 nm) and the current value observed at this time was recorded.

### (ii) Measurement Using Electrolytic Solution (Comparison)

For comparison, an electrolytic solution was used instead of the gel sheet to perform a measurement similar to the above (i). Specifically, the dye-labeled, DNA-immobilized working electrode prepared in the above (1) and a counter electrode having a glass plate, on which platinum was vapor-deposited, were provided. A gasket having a thickness of 1 mm was sandwiched between both the electrodes, and the air gap was filled with 0.2 m NPrI4 solution prepared at the above (1). At this time, both the electrodes were arranged so that the surface of the working electrode to which ssDNA was immobilized could face the platinum-deposited surface of the counter electrode. In a state where both the electrodes were connected to an electrochemical analyzer, the working electrode was irradiated with a laser source (green laser having an output of 60 mW, an irradiation region diameter of 1 mm, and a wavelength of 530 nm) and the current value at this time was observed and recorded.

The result is shown in Fig. 9. As shown in Fig. 9, when using the gel sheet, remarkably higher photocurrent was detected over the entire region of the electrolyte concentration from 0.1 to 0.5 M than the case of using the electrolytic solution.

### Example A2: Effect of Gel Concentration

### (1) Preparation of Dye-labeled, DNA-immobilized Working Electrode

The dye-labeled, DNA-immobilized working electrode was prepared in the same manner as Example 1 except that ssDNA concentration to be immobilized was made two concentrations of 10 nM and 100 nM.

### (2) Preparation of Gel Sheet

The gel sheet was prepared in the same manner as Example 1 except that the agarose concentration was changed among 0.5 %, 4 %, 8 %, and 10 %.

### (3) Photocurrent Measurement

Photocurrent was measured in the same manner as Example 1 using each of the working electrodes having different adsorption immobilization concentrations prepared in the above (1) and each of the gel sheets having different agarose concentrations prepared in the above (2).

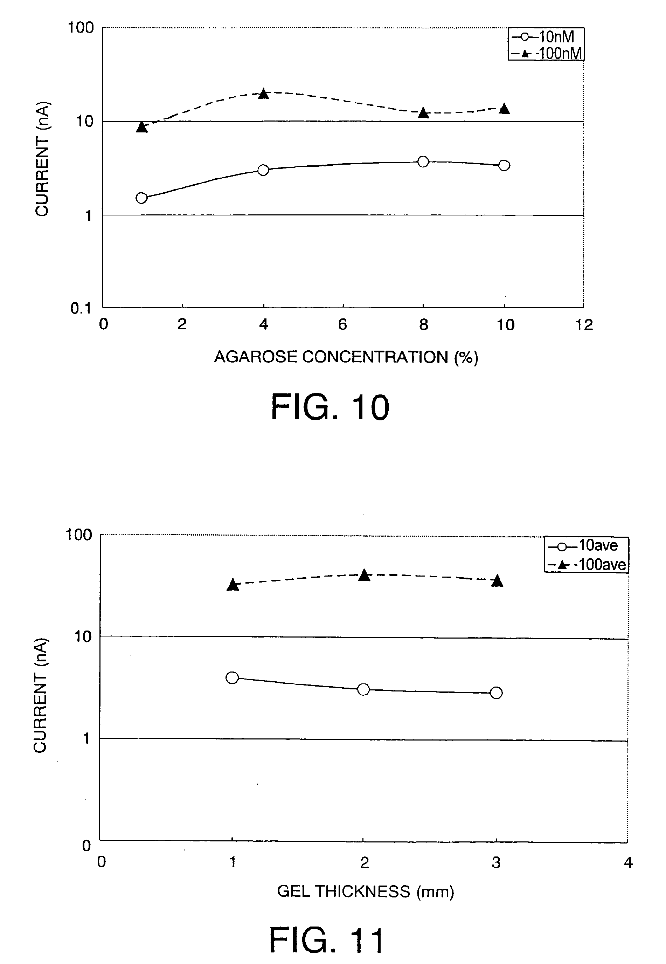

The result is shown in Fig. 10. As shown in Fig. 10, almost no effect of agarose concentration to photocurrent value was found over the entire range of agarose concentration from 0.5 % to 10 %. Therefore, it is assumed that no adverse effect to photocurrent detection occurs even if a gel is used in a relatively large amount for obtaining a sufficient strength.

### Example A3: Effect of Thickness of Gel Sheet

### (1) Preparation of Dye-labeled, DNA-immobilized Working Electrode

A dye-labeled, DNA-immobilized working electrode was prepared in the same manner as Example 1(1) except that ssDNA concentration to be immobilized was made to two concentrations of 10 nM and 100 nM.

### (2) Preparation of Gel Sheet

The gel sheet was prepared in the same manner as Example 1 except that the agarose concentration was fixed to 1 % and the thickness of the gel sheet was made to 1 mm, 2 mm, and 3 mm.

### (3) Photocurrent Measurement

Photocurrent was measured in the same manner as Example 1 using each of the working electrodes having different adsorption immobilization concentration prepared in the above (1) and each of the gel sheets having different thicknesses prepared in the above (2).

The result is shown in Fig. 11. As shown in Fig. 11, almost no effect to photocurrent value was found over the entire range of gel sheet thickness from 1 mm to 3 mm. Therefore, it is assumed that no adverse effect to photocurrent detection occurs even if the gel sheet thickness is increased for obtaining a sufficient strength.

### Example A4: Study on Method of Producing Gel Sheet

Effect on photocurrent measurement was studied in the case where an electrolyte and a gelling agent (agarose) were added to water, heated and dissolved to prepare a gel (hereinafter, mixing preparation) and the case where a gel was formed only with use of a gelling agent and then immersed in an electrolyte solution to disperse the electrolyte in the gel (hereinafter, immersion preparation). Specifically, in the mixing preparation, a gel sheet having a thickness of 1 mm was prepared in the same manner as Example 1, and cut into an appropriate size. On the other hand, in the immersion preparation, a gel sheet having a thickness of 1 mm was prepared in the same manner as Example 1 except for using no electrolyte, cut into an appropriate size, and was then immersed in the 0.2M Npr4I solution at room temperature overnight. The gel sheet was taken out from the solution, and the adhered residual reducer solution was then washed away with pure water, which was then drained off. Each gel sheet was sandwiched between the working electrode and the counter electrode, and a photocurrent measurement was conducted in the same manner as Example 1(3). A photocurrent measurement as in the above was also conducted with use of a working electrode prepared using each of the solutions having rhodamine-labeled ssDNA concentrations of 0 nM and 10 nM,.

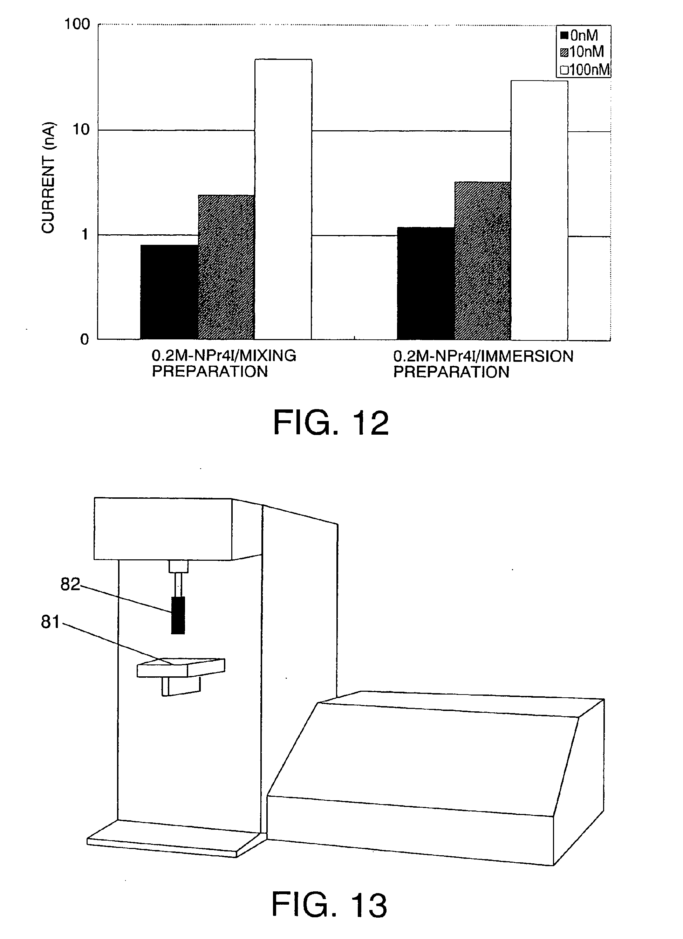

The results are shown in Fig. 12. As shown in Fig. 12, it is found that, in the gel sheet prepared by the immersion preparation, photocurrents substantially similar to those in the gel sheet prepared by the mixing preparation was detected, which means that a similar performance was obtained. Therefore, even when a combination of the electrolyte and the gelling agent is not suitable for the mixing preparation (for example, a case where solidification through heat dissolution is difficult as in the combination of polyacrylamide gel and NPr4I), the gel sheet can be easily prepared according to the immersion preparation, in which the gel is immersed after gelatinization.

### Example A5: Study of Gel Strength of Gel Sheet

### (1) Preparation of Gel Sheet Not Containing Electrolyte

A gel sheet was prepared in the same manner as Example 1 except that no electrolyte was used and final concentration of agarose was adjusted to 0.1 %, 0.5 %, 0.8 %, 1 %, 2 %, 4 %, 8 %, and 15 %.

### (2) Strength Measurement of Gel Sheet

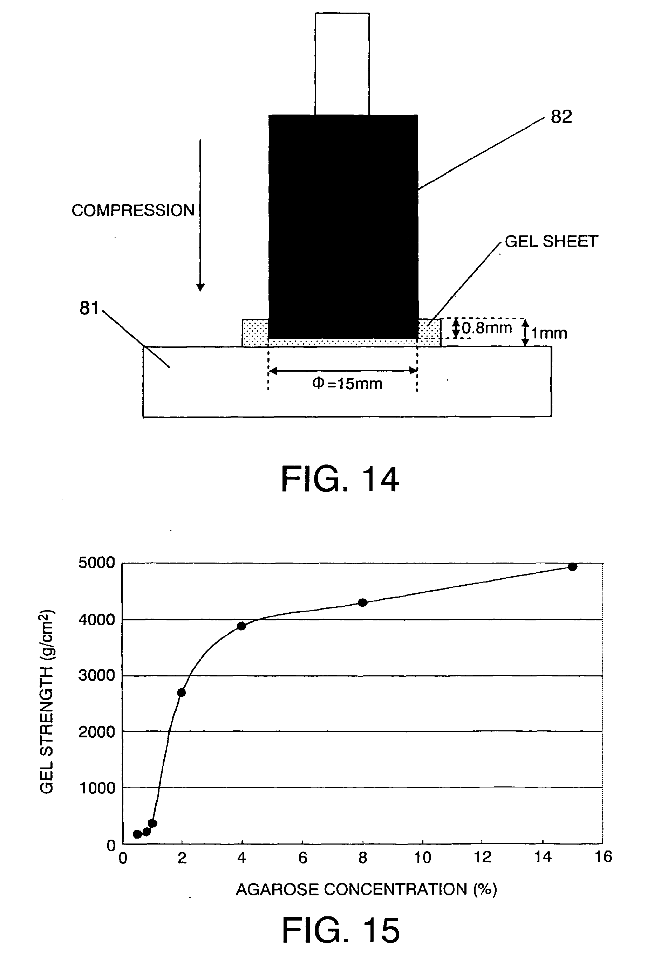

A gel strength (g/cm²) of the obtained gel sheet was measured by MODE-2 of "Rheo Meter CR-200D" (Sun Scientific Co.,Ltd.). Fig. 13 shows a schematic diagram of "Rheo Meter CR-200D". As shown in Fig. 13, the measuring device is provided with a table 81 and a bar-shaped adapter 82. The bar-shaped adapter 82 is Adapter No. 25-15 mm produced by Sun Scientific Co.,Ltd., which is made of acrylic resin, with a surface to be contacted with the gel sheet having a diameter of 15 mm. As shown in Fig. 14, in this measurement, the gel sheet having dimensions of 30 mm × 30 mm and a thickness of 1 mm was placed on the table 81, and the bar-shaped adapter 82 was then intruded into the depth of 0.8mm at a speed of 100 mm/min to compress the gel. The maximum load applied on the gel sheet at this time was measured (the load is set as HOLD). The gel sheet was located so that the bar-shaped adapter did not protrude from the gel sheet. This measurement was conducted three times while exchanging the gel sheet each time. Gel strength (g/cm²) was obtained by converting the average value into a load per surface area.

The results are shown in Fig. 15. As shown in Fig. 15, it is found that the gel strength is increased as the agarose content increases. Although no gelatinization occurred at an agarose concentration of 0.1 %, a gel sheet which can be handled independently and has a gel strength of 169.9 g/cm² was obtained at an agarose concentration of 0.5 %. As a result, the gel strength is preferred to be at least 100 g/cm² or more for forming the gel sheet which can be handled independently.

### Example A6: Gel Sheet Using Polyacrylamide

7.5% of polyacrylamide gel (thickness: 1 mm) was cut to an appropriate size, and was immersed in the 0.2M Npr4I solution at room temperature overnight to allow the gel to be impregnated with a reducer. The residual reducer solution was washed away with pure water, which was subsequently drained off, and the photocurrent was then measured in the same manner as Example 1. In addition, for reference, a gel sheet having the same thickness was prepared using agarose of 1% by weight, and the gel sheet was immersed in 0.2M Npr4I solution at room temperature overnight to allow the gel sheet to be impregnated with a reducer for use. The photocurrent was measured in the same manner as Example 1. A dye-labeled, DNA-immobilized working electrode was prepared in the same manner as Example 1, while working electrodes were prepared with use of each of solutions having rhodamine-labeled ssDNA concentrations of 0 nM and 10 nM. With these electordes, photocurrent measurement was conducted in the same manner as described above.

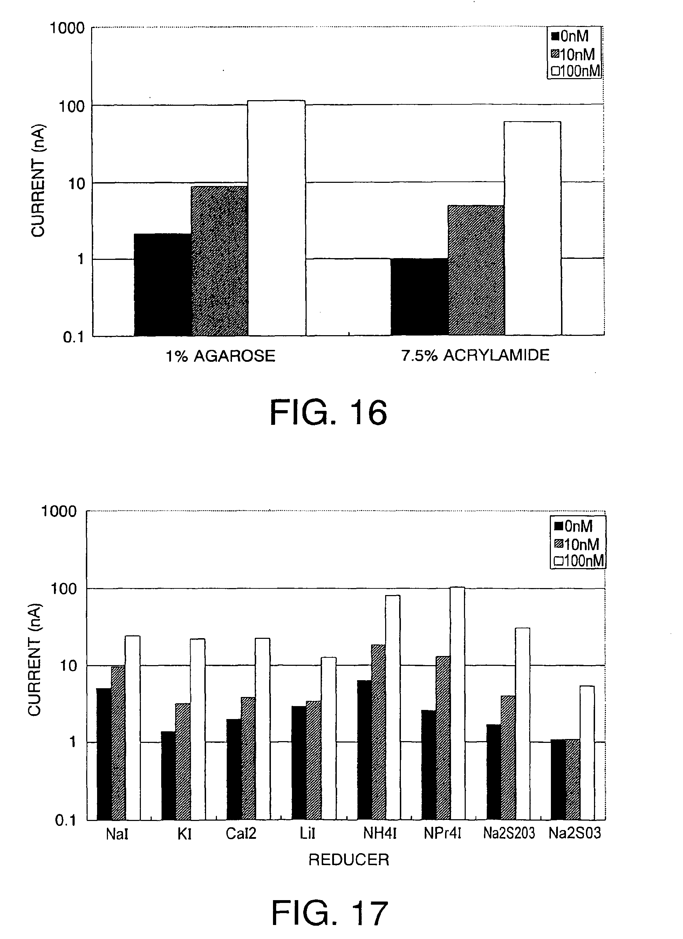

The results are shown in Fig. 16. As shown in Fig. 16, in the gel sheet using acrylamide, photocurrents similar to those measured for the gel sheet using agarose were measured.

### Example A7: Study of Various Electrolyte

Photocurrent measurement was conducted using various kinds of electrolytes. Specifically, a gel sheet was prepared by using 1 % by weight of agarose as a gelling agent and fixing the concentration of each reducer to 0.2 M. As electrolytes, NaI, KI, CaI₂, LiI, NH₄I, tetrapropyl ammonium iodide (NPr₄I), sodium thiosulfate (Na₂S₂O₃), and sodium sulfite (Na₂SO₃) were used. The agarose and the electrolyte were added to water, and were heated and dissolved in an autoclave in the same manner as Example 1. The obtained mixture was allowed to cool to room temperature for solidification, and cut to an appropriate size to obtain a gel sheet. The photocurrent was measured in the same manner as Example 1. A dye-labeled, DNA-immobilized working electrode was prepared in the same manner as Example 1, while working electrodes prepared using each of solutions having rhodamine-labeled ssDNA concentrations of 0 nM and 10 nM. With these electordes, photocurrent measurement was conducted in the same manner as described above.

The results are shown in Fig. 17. With every reducer, there was found an increase in photocurrent depending on the amount of immobilized ssDNA, and thus it has been clarified that various kinds of reducers are usable.

### EXAMPLE A8: Detection of Single Nucleotide Polymorphisms (SNPs)

In the present Example, a gel sheet was applied to detect single nucleotide polymorphisms of p53gene. A perfectly matching (PM) probe, a strand probe having a single nucleotide variation (SNP), and a completely mismatching (MM) probe were immobilized to the working electrode side. Each of the base sequences is as follows.
Perfectly matching (PM) probe:
5'-NH2-AGGATGGGCCTCAGGTTCATGCCGC-3' (Sequence No. 3) Strand probe having a single nucleotide variation (SNP):
5'-NH2-AGGATGGGCCTCCGGTTCATGCCGC-3' (Sequence No. 4) Completely mismatching (MM) probe:
5'-NH2-GCGGCATGAACCGGAGGCCCATCCT-3' (Sequence No. 5)

The base sequence of target DNA subjected to hybridization with these probes is as follows.
Target DNA:
5'-rhodamine- GCGCCATGAACCTGAGGCCCATCCT-3' (Sequence No. 6)

A fluorine-doped tin oxide (F-SnO₂:FTO) coasted glass (produced by AI Special Glass Company, U-film, sheet resistance: 12Ω/□, and configuration of 50mm × 26mm) was prepared as a glass substrate for working electrode. This glass substrate was subjected to ultrasonic cleaning in acetone for 15 minutes and subsequently to ultrasonic cleaning in ultra-pure water for 15 minutes to remove contaminant and residual organic substance. The glass substrate was shaken for 15 minutes in 5 M aqueous sodium hydroxide. The glass substrate was shaken for 5 minutes in ultra-pure water, and this step was repeated three times while exchanging the water each time, in order to remove sodium hydroxide. The glass substrate was taken out, and air was blown on the glass substrate to blow away the residual water. The glass substrate was then immersed in anhydrous methanol for hydroextraction.

3-aminopropyltrimethoxysilane (APTMS) was added to a solvent comprising 95 % methanol and 5 % ultra-pure water to bring the APTMS concentration to 2 % by volume, and the mixture was stirred for 5 minutes at room temperature to prepare a solution to be used for coupling treatment. The above glass substrate was immersed in the coupling treating solution and then slowly shaken for 15 minutes. The glass substrate was then taken out and subjected to 3 sets of the process of shaking the glass substrate approximately 10 times in methanol for removing the surplus coupling treating solution, while exchanging the methanol on each set. The glass substrate was kept at 110 °C for 30 minutes to bond the coupling agent to the glass substrate. After cooling the glass substrate at room temperature, an adhesive seal (thickness: 0.5mm) having 9 spots of openings with a diameter of 3 mm was placed on and brought into close contact with the glass substrate. Subsequently, after probe DNAs (25mer) of the perfectly matching strand, the single nucleotide variation strand and the completely mismatching strand adjusted to 1 µM were retained at a temperature of 95 °C for 10 minutes, the DNA was immediately transferred onto ice and maintained for 10 minutes to denature the DNA. This denatured DNA was then filled into the 9 openings in an amount of 5 µ1 on each opening on the glass, and the solvent was evaporated through retention at 95 °C for 10 minutes. Thereafter, a UV cross-linker (UVP Corporation, CL-1000 model) was used to irradiate the glass substrate with 120 mJ of ultraviolet light to immobilize the probe DNA on the glass substrate (three spots for each probe were immobilized). The seal was then peeled off from the glass substrate. The glass substrate was subjected to 3 sets of the processes of being shaken for 15 minutes in 0.2% SDS solution, and was rinsed while exchanging the ultra pure water three times. The glass substrate was immersed in boiling water for 2 minutes, taken out, and then aired to blow away the residual water. The glass substrate was then immersed in anhydrous ethanol at 4 °C for one minute for hydroextraction, and then aired to blow away the residual ethanol. In this way, the probe DNA-immobilized working electrode was obtained.

Thereafter, 5×SSC 0.5% SDS solution containing the target DNA was placed on the electrode onto which the probe was immobilized, and was sealed with a cover glass. This electrode was subsequently kept at a temperature of 37 °C for ten hours. The electrode was propped against a rack and immersed in a water vessel filled with 5 L of 0.2xSSC 0.2% SDS solution at 63°C for one minute. The electrode was then rinsed with water twice, and then dried.

The working electrode thus obtained was mounted into a measuring cell, and an XY stage for light source automatic movement was attached to the measuring cell. As for the cell part, in the case of using a gel sheet, configuration of the cell part was such that the working electrode and the platinum counter electrode were opposed to each other, and the gel sheet was sandwiched between the working electrode and the counter electrode while preventing shortcut due to contact between the electrodes. In the case of using an electrolytic solution, the working electrode and the platinum counter electrode were opposed to each other, and a silicon sheet having a thickness of 500 µm was inserted for preventing shortcut due to contact between the electrodes and creating a space to be filled with the electrolytic solution. In the silicon sheet, a hole large enough to encompass all the spots is formed so that the electrolytic solution flown herein can be stored to contact DNA immobilized onto the working electrode. Both of the working electrode and the counter electrode were connected to a high sensitivity ammeter via a spring probe electrically connected to the electrodes.

Light was applied from a light source fixed to the XY stage for automatic transfer above the back surface of the working electrode, and the current flowing between the working electrode and the platinum counter electrode was measured with time. A light shielding member having a shape similar to the spot on an FTO substrate was provided above the working electrode to prevent light irradiation to the neighboring spots, while non-irradiation spot of light was provided. Measurement was conducted by scanning the spots sequentially, while the current output in the spot was stored in a personal computer via the high sensitivity ammeter.

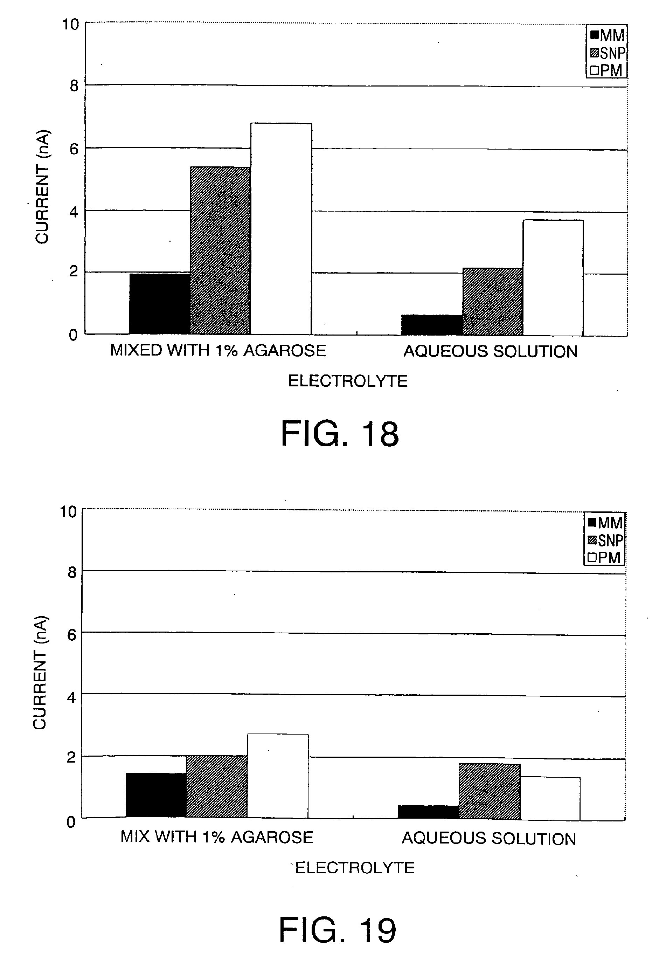

The results at the target DNA concentration of 1 µM are shown in Fig. 18, while the results at the target DNA concentration of 100 nM are shown in Fig. 19. As shown in Figs. 18 and 19, when the target concentration was 1 µM, single nucleotide polymorphism (SNPs) was detected as the difference of the photocurrent values with any configuration of the electrolytic solution and the gel sheet. At the target concentration of 100 nM, however, SNPs was detected as the difference of the photocurrent values only with a configuration of the gel sheet.

### Example B1: Photocurrent Measurement Using Electrolyte-Containing Water-Absorbent Sheet

### (1) Preparation of Dye-labeled, DNA-immobilized Working Electrode

A fluorine-doped tin oxide (F-SnO₂:FTO) coated glass (produced by AI Special Glass Company, U-film, sheet resistance: 12Ω/□, and configuration of 50 mm × 26 mm) was provided as a glass substrate for working electrode. This glass substrate was subjected to ultrasonic cleaning in acetone for 15 minutes and subsequently to ultrasonic cleaning in ultra-pure water for 15 minutes to remove contaminant and residual organic substance. The glass substrate was shaken for 15 minutes in 5M aqueous sodium hydroxide. The glass substrate was then shaken for 5 minutes in ultra-pure water, and this step was repeated three times while exchanging the water each time, in order to remove sodium hydroxide. The glass substrate was taken out, and air was blown on the glass substrate to blow away the residual water, and then the glass substrate was then immersed in anhydrous methanol for hydroextraction.

3-aminopropyltrimethoxysilane (APTMS) was added to a solvent comprising 95 % methanol and 5 % ultra-pure water to bring to the APTMS concentration to 2 % by volume, and the mixture was stirred for 5 minutes at room temperature to prepare a solution to be used for coupling treatment. The above glass substrate was immersed in the coupling treating solution and then slowly shaken for 15 minutes. The glass substrate was then taken out and subjected to 3 sets of the process of shaking the glass substrate approximately 10 times in methanol for removing the surplus coupling treating solution, while exchanging the methanol on each set. The glasses were kept at 110 °C for 30 minutes to bond the coupling agent to the glass substrate. After cooling the glass substrate at room temperature, an adhesive seal (thickness: 0.5mm) having 9 spots of openings with a diameter of 3 mm was placed on and brought into close contact with the glass substrate. Subsequently, after 5'-terminal rhodamine-labeled ssDNA (25mer) prepared to have a concentration of 100 nM and rhodamine non-labeled ssDNA (24mer) prepared to have a concentration of 100nM were retained at a temperature of 95 °C for 10 minutes, the DNAs were immediately transferred onto ice and maintained for 10 minutes to denature the DNAs. These denatured DNAs were then filled into the 9 openings in an amount of 5 µ1 on each opening on the glass prepared before, and the solvent was evaporated through retention at 95 °C for 10 minutes. Thereafter, a UV cross-linker (UVP Corporation, CL-1000 model) was used to irradiate the glass substrate with 120 mJ of ultraviolet light to immobilize the label ssDNA on the glass substrate. The seal was then peeled off from the glass substrate. The glass substrate was subjected to 3 sets of the processes of being shaken for 15 minutes in 0.2% SDS solution, and was rinsed while exchanging the ultra pure water three times. The glass substrate was immersed in boiling water for 2 minutes, taken out, and aired to blow away the residual water. The glass substrate was then immersed in anhydrous ethanol at 4 °C for one minute for hydroextraction, and then aired to blow away the residual ethanol. In this way, the dye-labeled, DNA-immobilized working electrode was obtained. The base sequence of the probe DNA used here is as follows:
5'-terminal rhodamine-labeled ssDNA (probe 1):
5'-Rho-GCGGCATGAACCTGAGGCCCATCCT-3' (Sequence No. 1) Non-labeled ssDNA (probe 2):
5'-TTGAGCAAGGTCAGCCTGGTTAAG-3' (Sequence No. 2)

### (2) Preparation of Electrolyte-Containing Absorbent Sheet

Aqueous solutions containing tetrapropyl ammonium iodide (NPr4I) of 0.2 M, 0.4 M, and 0.6 M were prepared. A blotting filter paper (CB-13A; ATTO Corporation) having a thickness of 0.9 mm which was cut to a size of 26 mm × 20 mm was immersed in this aqueous solution, which was then lightly drained off, to obtain an electrolyte-containing absorbent sheet.

### (3) Photocurrent Measurement Using Electrolyte-Containing Absorbent Sheet

The dye-labeled, DNA-immobilized working electrode prepared in the above (1) and a counter electrode having a glass plate, on which platinum was vapor-deposited, were provided. The electrolyte-containing absorbent sheet prepared in the above (2) was sandwiched between both the electrodes to be in close contact with each other. At this time, both the electrodes were arranged so that the surface of the working electrode to which ssDNA was immobilized could face a platinum-deposited surface of the counter electrode. In a state where both the electrodes were connected to an electrochemical analyzer, the working electrode was irradiated with light from a laser source (green laser having output of 60mW, irradiation region diameter of 1 mm, and wavelength of 530 nm) and the current value observed at this time was recorded.

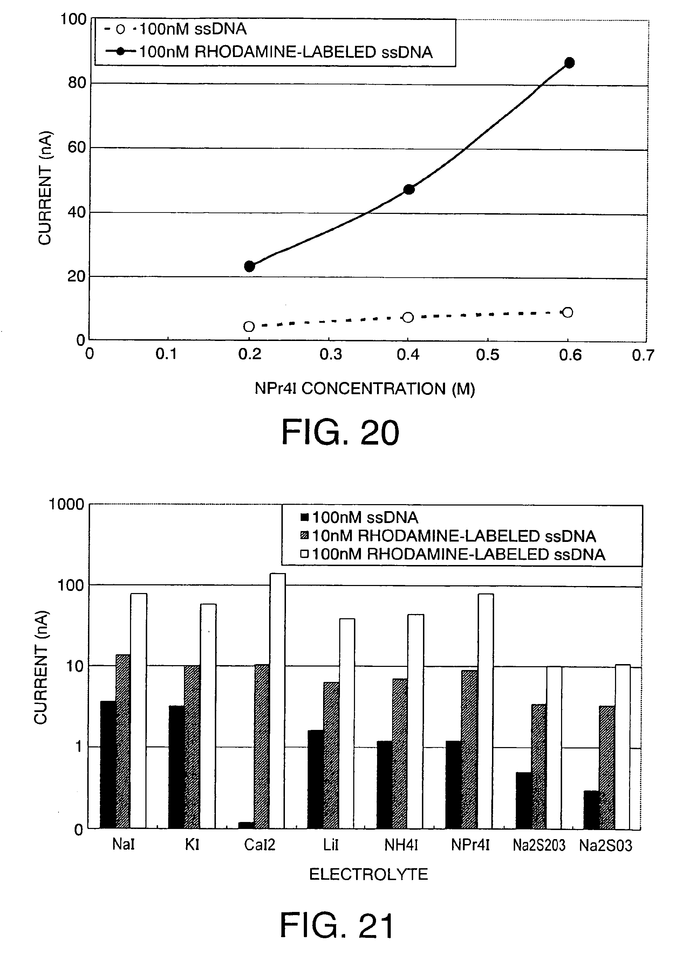

The result are shown in Fig. 20. As shown in Fig. 20, there was found an increase in photocurrent depending on the concentration of tetrapropyl ammonium iodide, and thus it has been clarified that any concentration of tetrapropyl ammonium iodide was usable for the measurement.

### Example B2: Study of Various Electrolytes

Photocurrent measurement was conducted using various kinds of electrolytes. Specifically, an electrolyte-containing absorbent sheet was prepared by using a filter paper as a water-absorbent substrate and fixing the concentration of each reducer 0.2 M. As electrolytes, NaI, KI, CaI₂, LiI, NH₄I, tetrapropyl ammonium iodide (NPr₄I), sodium thiosulfate (Na₂S₂O₃), and sodium sulfite (Na₂SO₃) were used. An electrolytic solution containing the various kinds of the electrolytes and water was prepared. A blotting filter paper (CB-13A; ATTO Corporation) having a thickness of 0.9 mm which was cut to a size of 26 mm × 20 mm was immersed in this solution, which was then lightly drilled off, to obtain an electrolyte-containing absorbent sheet. The photocurrent was measured in the same manner as Example B1. A dye-labeled, DNA-immobilized working electrode was prepared in the same manner as Example B1, while the working electrodes prepared using each of the solutions having a rhodamine-labeled ssDNA concentration of 10 nM and a rhodamine non-labeled ssDNA concentration of 100 nM. With these electrodes, photocurrent measurement was conducted in the same manner as described above.

The results are shown in Fig. 21. As shown in Fig. 21, in every electrolyte studied, there was found an increase in photocurrent depending on ssDNA immobilized amount, and thus it has been clarified that such electrolytes were usable for measurement.

### Example B3: Effect of Thickness of Electrolyte-Containing Absorbent Sheet

### (1) Preparation of Dye-labeled, DNA-Immobilized Working Electrode

A dye-labeled, DNA-immobilized working electrode was prepared in the same manner as Example B1(1) except that ssDNA concentration to be immobilized was made to two concentrations of 100 nM and 1 µM.

### (2) Preparation of Electrolyte-Containing Absorbent Sheet

An electrolytic solution was prepared using tetrapropyl ammonium iodide (NPr4I) having a concentration of 0.2M and water. Blotting filter paper (CB-13A; ATO Corporation) each having a thickness of 0.9 mm was used to form one single sheet, a two-sheet stack and a three-sheet stack, each of which was immersed in the electrolytic solution to form electrolyte-containing absorbent sheets.

### (3) Photocurrent Measurement

Photocurrent was measured in the same manner as Example 1, using the working electrode having spots different in immobilization concentration prepared in the above (1) and each of the electrolyte-containing absorbent sheets having different thicknesses prepared in the above (2).

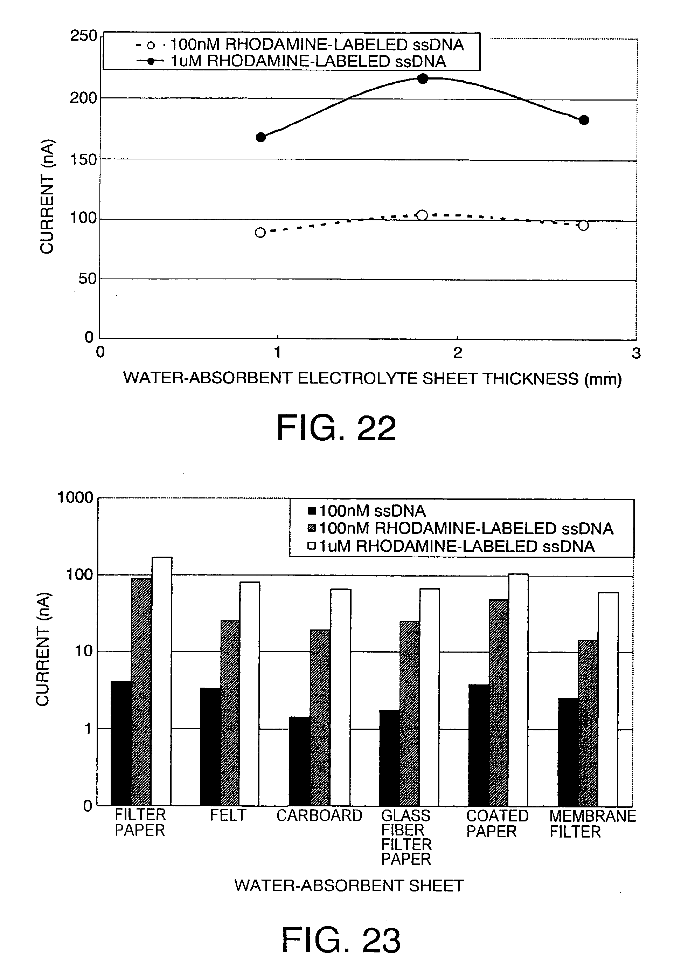

The results are shown in Fig. 22. As shown in Fig. 22, almost no effect to photocurrent was found over the entire thickness range of the electrolyte-containing absorbent sheet from 0.9 mm to 2.7 mm. It is therefore assumed that no adverse effect to the photocurrent detection occurs even if the electrolyte-containing absorbent sheet thickness is increased for attaining a sufficient strength.

### Example B4: Study of Each Absorbent Substrate

Photocurrent was measured in the same manner as Example 1, except for using a blotting filter paper having a thickness of 0.9 mm (CB-13A; ATTO Corporation), a felt (thickness: 1 mm, density: 0.00049 g/mm³), a cardboard (thickness: 0.5 mm, density: 0.00071 g/mm³), a glass fiber filter paper (GF/D; Whatman; thickness: 0.68 mm), a coat sheet including pulp fibers and synthetic fibers (thickness: 0.14 mm, density: 0.00111 g/mm³), and a membrane filter mainly comprising a fluorine resin (JCWP09025; MILLIPORE: thickness: 0.1mm), as a water-absorbent substrate. A dye-labeled, DNA-immobilized working electrode was prepared in the same manner as Example B1, while working electrodes were prepared with use of each of the solutions having rhodamine-labeled ssDNA concentrations of 100 nM and 1 µM and a rhodamine non-labeled ssDNA concentration of 100 nM. With these electrodes, photocurrent measurement was conducted in the same manner as Example B1. An aqueous solution containing 0.2M tetrapropyl ammonium iodide (NPr₄I) was used as an electrolytic solution.

The results are shown in Fig. 23. As shown in Fig. 23, in every electrolyte-containing water-absorbent sheet, there was found an increase in photocurrent depending on an ssDNA immobilization amount, and thus it has been clarified that such electrolyte-containing water-absorbent sheets are usable.

### Example B5: Study of Water Content of Electrolyte-Containing Absorbent Sheet

### (1) Measurement of Water content

500 µl of an aqueous solution containing tetrapropyl ammonium iodide (NPr4I) of 0.4 M was dripped on a blotting filter paper having a thickness of 0.9 mm cut to a size of 26 mm × 20 mm (CB-13A; ATTO Corporation) to immerse the filter paper completely into the electrolytic solution. In this way, six sheets of filter paper impregnated with the electrolytic solution were prepared. Each impregnated filter paper was dried at 50 °C for 0 hours, 0.25 hours, 0.5 hours, 1 hour, 1.25 hours and 1.5 hours, respectively. The weight of the filter paper after the drying was measured, and the weight of the tetrapropyl ammonium iodide was removed. The water content in the filter paper per 1mm³ was then calculated. The ratio of (water content per 1mm³)/(filter paper density) was calculated to obtain the water content of the electrolyte-containing absorbent sheet. It should be noted that the density of the blotting filter paper is 0.00049 g/mm³.

### (2) Photocurrent Measurement

Photocurrent was detected in the same manner as Example 1 with each of the electrolyte-containing absorbent sheets having different water contents prepared in the above (1).

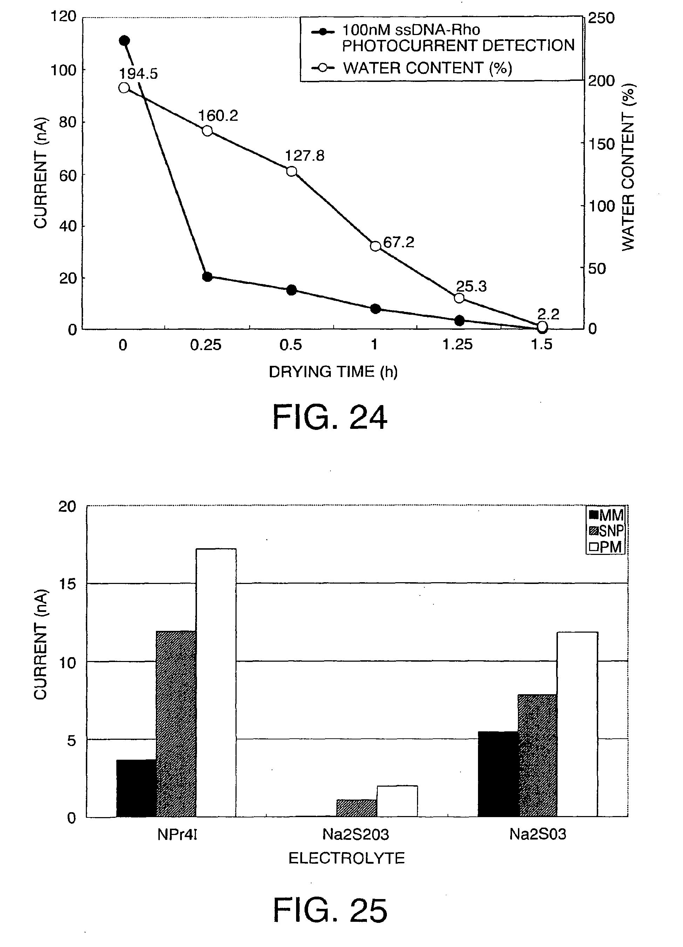

The results are shown in Fig. 24. As shown in Fig. 24, it is found that the photocurrent increases as the water content of the electrolyte-containing absorbent sheet becomes higher. In addition, although photocurrent was not detected when the water content was 2.2 %, photocurrent was detected when the water content was 25.3 %. In view of the above, it is preferable that the electrolyte-containing absorbent sheet enabling photocurrent detection has a water content of at least 20 %.

### EXAMPLE B6: Detection of Single Nucleotide Polymorphisms (SNPs) Using Various Electrolyte

In the present Example, an electrolyte-containing absorbent sheet was applied to detection of a single nucleotide polymorphism of p53 gene. A perfectly matching probe, a strand probe having a single nucleotide variation, and a completely mismatching probe were immobilized to the working electrode side. Each of the base sequences is as follows.
Perfectly matching (PM) probe:
5'-AGGATGGGCCTCAGGTTCATGCCGC-3' (Sequence No. 3) Strand probe having a single nucleotide variation (SNP):
5'-AGGATGGGCCTCCGGTTCATGCCGC-3' (Sequence No. 4) Completely mismatching (MM) probe:
5'-GCGGCATGAACCGGAGGCCCATCCT-3' (Sequence No. 5)

The base sequence of target DNA subjected to hybridization with these probes is as follows.
Target DNA:
5'-rhodamine- GCGGCATGAACCTGAGGCCCATCCT-3' (Sequence No. 6)

A fluorine-doped tin oxide (F-SnO₂:FTO) coated glass (produced by AI Special Glass Company, U-film, sheet resistance: 12Ω/□, and configuration of 50 mm × 26 mm) was prepared as a glass substrate for working electrode. This glass substrate was subjected to ultrasonic cleaning in acetone for 15 minutes and subsequently to ultrasonic cleaning in ultra-pure water for 15 minutes to remove contaminant and residual organic substance. The glass substrate was shaken for 15 minutes in 5M aqueous sodium hydroxide. The glass substrate was then shaken for 5 minutes in ultra-pure water, and this step was repeated three times while exchanging the water, in order to remove sodium hydroxide. The glass substrate was taken out, and air was blown on the glass substrate to blow away the residual water. The glass substrate was immersed in anhydrous methanol for hydroextraction.

3-aminopropyltrimethoxysilane (APTMS) was added to a solvent comprising 95 % methanol and 5 % ultra-pure water to bring the APTMS concentration to 2 % by volume, and the mixture was stirred for 5 minutes at room temperature to prepare a solution to be used for coupling treatment. The above glass substrate was immersed in the coupling treating solution and then slowly shaken for 15 minutes. The glass substrate was taken out and subjected to 3 sets of the process of shaking the glass substrate approximately 10 times in methanol for removing the surplus coupling treating solution, while exchanging the methanol on each set. The glass substrate was kept at 110 °C for 30 minutes to bond the coupling agent to the glass substrate. After cooling the glass substrate at room temperature, an adhesive seal (thickness: 0.5 mm) having 9 spots of openings with a diameter of 3 mm was placed on and brought into close contact with the glass substrate. Subsequently, after probe DNAs (25mer) of a perfectly matching strand, a single nucleotide variation strand, and a completely mismatching strand prepared to have a concentration 1 µM were retained at a temperature of 95 °C for 10 minutes, and were immediately transferred onto ice and maintained for 10 minutes to denature the DNA. This denatured DNA was then filled into the 9 openings in an amount of 5 µ1 on each opening on the glass, and the solvent was evaporated through retention at 95 °C for 10 minutes. Thereafter, a UV cross-linker (UVP Corporation, CL-1000 model) was used to irradiate the glass substrate with 120 mJ of ultraviolet light to immobilize the probe DNA on the glass substrate (three spots for each probe were immobilized). The seal was peeled off from the glass substrate. The glass substrate was subjected to 3 sets of the process of being shaken for 15 minutes in 0.2 % SDS solution, and was rinsed by exchanging the ultra pure water three times. The glass substrate was immersed in boiling water for 2 minutes, taken out, and then aired to blow away the residual water. The glass substrate was then immersed in anhydrous ethanol at 4 °C for one minute for hydroextraction, and then aired to blow away the residual ethanol. In this way, the probe-DNA-immobilized working electrode was obtained.

Thereafter, 5×SSC 0.5% SDS solution containing target DNA prepared to have a concentration of 100 nM was placed on the electrode onto which the probe was immobilized, and was sealed with a cover glass. This electrode was subsequently kept at a temperature of 37°C for ten hours. The cover glass was then peeled off in 2xSSC (room temperature), and the electrode was propped against a rack. The electrode was shaken in 2xSSC/0.2%SDS solution set at 40 °C for 30 minutes, rinsed with water, and then dried.

The working electrode and the electrolyte-containing absorbent sheet thus obtained were mounted into a measuring cell, and an XY stage for light source automatic movement was attached to the measuring cell. As for the cell part, configuration of the cell was such that the working electrode and the platinum counter electrode were opposed to each other, and both the working electrode and the counter electrode were connected to a high sensitivity ammeter via a spring probe connected electrically to the electrodes while preventing shortcut due to contact between the electrodes. A filter paper was used as a water-absorbent substrate in the electrolyte-containing absorbent sheet, and the concentration of each reducer was fixed to 0.4 M to prepare the electrolyte-containing absorbent sheet. As the electrolyte, tetrapropyl ammonium iodide (NPr₄I), sodium thiosulfate (Na₂S₂O₃), and sodium sulfite (Na₂SO₃) were used. Electrolytic solutions containing various kinds of electrolytes and water were prepared. A blotting filter paper (same as Example 1) having a thickness of 0.9 mm which was cut to a size of 26 mm × 20 mm was immersed in this solution, which was then lightly drained off, to obtain an electrolyte-containing absorbent sheet.

Light was applied from a light source fixed to the XY stage for automatic transfer above the back surface of the working electrode, and the current flowing between the working electrode and the platinum counter electrode was measured with time. A light shielding member having a shape similar to the spot on an FTO substrate was provided above the working electrode to prevent light irradiation to the neighboring spots, while non-irradiation spot of light was provided. Measurement was conducted by scanning the spots sequentially, while the current output in the spot was stored in a personal computer via the high sensitivity ammeter.

The results are shown in Fig. 25. As shown in Fig. 25, the single nucleotide polymorphisms (SNPs) were detected as the difference of the photocurrent values, using any electrolyte.

### EXAMPLE B7: Detection of Single Nucleotide Polymorphism (SNPs) Using Dried Electrolyte-Containing Absorbent Sheet

After the preparation of the electrolyte-containing absorbent sheet, photocurrent was detected in the same manner as Example B6 (dry type), except that the absorbent sheet was dried at 50°C for two hours, that the working electrode and the dried electrolyte-containing absorbent sheet were mounted in the measuring cell, and that 300 µl of water was then dripped on the electrolyte-containing water-absorbent sheet immediately before detecting the photocurrent. For comparison, an electrolyte-containing absorbent sheet was used which was prepared by immersing the water-absorbent substrate into the electrolytic solution immediately before photocurrent detection in the same manner as Example B6 (immersion type).

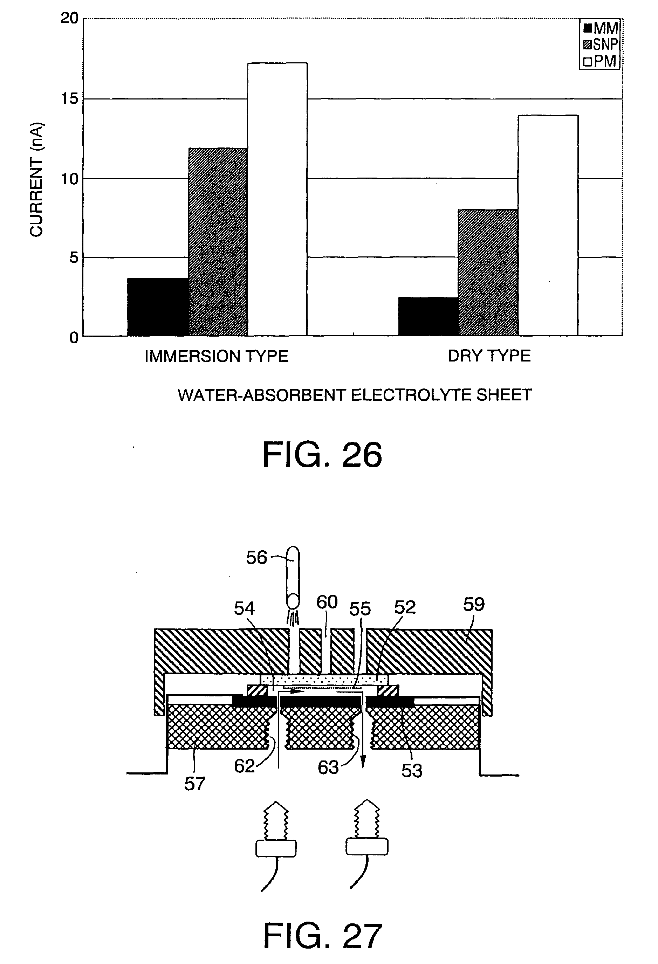

The results are shown in Fig. 26. As shown in Fig. 26, single nucleotide polymorphisms (SNPs) were detected as the difference of the photocurrent values even when the dried electrolyte-containing absorbent sheet was used.

### Example B8: Comparison between Aqueous Electrolytic Solution and Electrolyte-Containing Absorbent Sheet

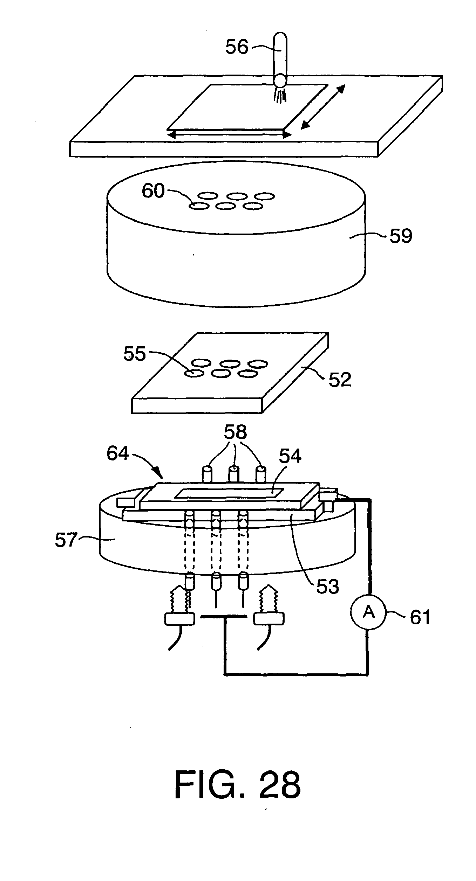

SNPs detection was respectively performed in an electrolytic solution containing 0.4 M of tetrapropyl ammonium iodide (NPr₄I) and water and in an electrolyte-containing absorbent sheet prepared by immersing an water-absorbent substrate into the electrolytic solution immediately before photocurrent detection in the same manner as Example B6, to compare detection accuracy between the case of using the aqueous electrolytic solution and the case of using the electrolyte-containing absorbent sheet. The SNPs detection of the electrolyte-containing absorbent sheet was conducted in the same manner as Example B6. In the SNPs detection using the aqueous electrolytic solution, the electrode substrate was prepared in the same manner as Example B6, while the measurement was conducted by using a flow-cell-type measurement cell. Figs. 27 and 28 respectively show a cross-sectional view and an exploded view of the flow-cell-type measurement cell according to the first embodiment.

In the flow-cell-type measurement cell shown in Figs. 27 and 28, a counter electrode 53 is provided on a substrate 57, in which a supply hole 62 and a discharge hole 63 for an electrolytic solution or a cleaning fluid are formed. An insulating spacer 64 having a space 54 accommodating the electrolytic solution is located on the counter electrode 53. A working electrode 52 is provided on the insulating spacer 64. A plurality of electron receiving layers 55 are formed to be spaced from each other on the surface facing the space 54 in the working electrode 52. Contact points 58 for the working electrode are provided through the substrate 57 not to interfere with the counter electrode 53. Photocurrent is taken out from the contact points 58 for the working electrode. A pressing member 59, which has holes 60 are formed at positions corresponding to the respective electron receiving layers 55, is provided on the working electrode 52. Light from a light source 56 is applied to the working electrode 52 through the through holes 60. An ammeter 61 is connected in between the working electrode 52 and the counter electrode 53, and photocurrent flowing in the system by light irradiation is measured.

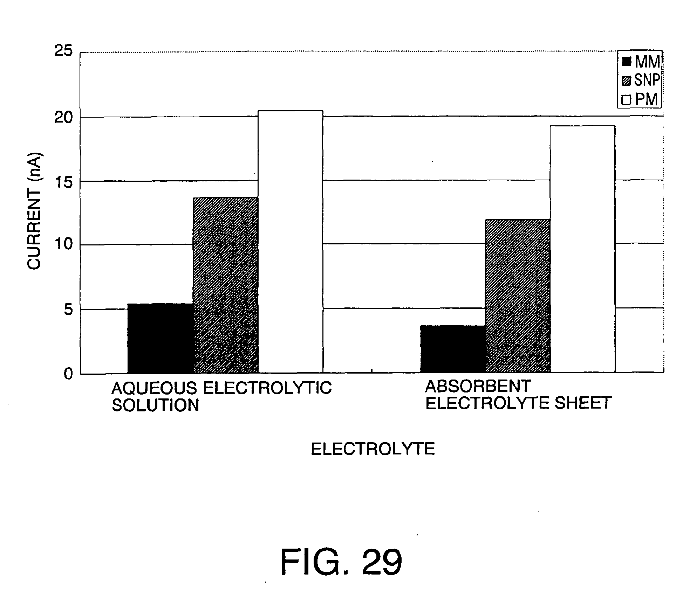

The results are shown in Fig. 29. As shown in Fig. 29, the single nucleotide polymorphisms (SNPs) were accurately detected as the difference of the photocurrent values even when using the electrolyte-containing absorbent sheet.

## Claims

1. An electrolyte-containing sheet comprising:
a hydrous substrate; and
an electrolyte contained in the hydrous substrate,
wherein the electrolyte-containing sheet is used as an electrolyte medium in specific detection of an analyte with use of photocurrent generated by photo-excitation of a sensitizing dye.

2. An electrolyte-containing sheet according to claim 1, wherein the electrolyte is at least one selected from the group consisting of sodium iodide (NaI), potassium iodide (KI), calcium iodide (CaI₂), lithium iodide (LiI), ammonium iodide (NH₄I), tetrapropyl ammonium iodide (NPr₄I), sodium thiosulfate (Na₂S₂O₃), sodium sulfite (Na₂SO₃), hydroquinone, K4[Fe(CN)₆]· 3H₂O, ferrocene-1, 1'-dicarboxylic acid, ferrocene carboxylic acid, sodium borohydride (NaBH₄), triethylamine, thiocyanate ammonium, hydrazine (N₂H₄), acetaldehyde (CH₃CHO), N,N,N',N'-tetramethyl-p-phenylenediamine dichloride, L-ascorbic acid, sodium tellurite (Na₂TeO₃), iron (II) chloride tetrahydrate (FeCl₂.4H₂O), EDTA, cysteine, triethanolamine, tripropylamine, iodine-containing lithium iodide (I/LiI), tris (2-chloroethyl) phosphate (TCEP), dithiothreitol (DTT), 2-mercaptoethanol, 2-mercaptoethanolamine, thiourea dioxide, (COOH)₂, and HCHO.

3. An electrolyte-containing sheet according to claim 1, wherein the electrolyte is at least one selected from the group consisting of NaI, KI, CaI₂, LiI, NH₄I, tetrapropyl ammonium iodide (NPr₄I), sodium thiosulfate (Na₂S₂O₃), and sodium sulfite (Na₂SO₃).

4. An electrolyte-containing sheet according to any one of claims 1 to 3, wherein the hydrous substrate is a gel matrix comprising at least one selected from a natural gel and a synthetic gel, wherein the electrolyte is dispersed in the gel matrix.

5. An electrolyte-containing sheet according to claim 4, wherein the sheet has a gel strength of 100 g/cm² or more.

6. An electrolyte-containing sheet according to claim 4 or 5, wherein the sheet has a thickness from 0.1 to 10 mm.

7. An electrolyte-containing sheet according to claim 4 or 5, wherein the sheet has a thickness from 1 to 3 mm.

8. An electrolyte-containing sheet according to any one of claims 4 to 7, wherein the gel matrix comprises the natural gel mainly composed of polysaccharide and protein.

9. An electrolyte-containing sheet according to claim 8, wherein the natural gel comprises at least one selected from the group consisting of agarose, alginic acid, carrageenan, locust bean gum, gellant gum, and gelatin.

10. An electrolyte-containing sheet according to claim 8, wherein the natural gel is a gel of agarose.

11. An electrolyte-containing sheet according to any one of claims 1 to 10, wherein the gel matrix comprises the synthetic gel, wherein the synthetic gel comprises at least one gel selected from the group consisting of polyacrylamide, a polyvinyl pyrrolidone, sodium polyacrylate, PVA-added polyacrylamide, polyethylene oxide, N-alkyl-modified (meta)acrylamide derivative, N,N-dimethylacrylamide, N,N-diethylacrylamide, acryloyl morpholine, N-methylacrylamide, N-ethylacrylamide, N-(iso)propylacrylamide, N-butylacrylamide, N-hydroxymethylacrylamide, N-hydroxyethyl acrylamide, N-hydroxypropyl acrylamide, N-hydroxybutylacrylamide, (meta)acrylic acid, t-butyl(meta)acrylamide sulfonic acid, sulfopropyl (meta)acrylate, (meta)acrylic acid, itaconic acid, (poly)alkylene glycol (meta)acrylate, hydroxyethyl (meta)acrylate, polyethylene-glycol (meta)acrylate, hydroxypropyl (meta)acrylate, polypropylene-glycol (meta)acrylate, glycerin (meta)acrylate, methylene bis(meta)acrylamide, ethylene bis(meta)acrylamide, (poly)ethylene glycol di(meta)acrylate, (poly)propyleneglycol di (meth)acrylate, glycerin di(meta)acrylate, glycerin tri(meta)acrylate, and tetra allyloxy ethane.

12. An electrolyte-containing sheet according to claim 11, wherein the synthetic gel is a gel of polyacrylamide.

13. An electrolyte-containing sheet according to any one of claims 1 to 3, wherein the hydrous substrate is a water-absorbent substrate.

14. An electrolyte-containing sheet according to claim 13, wherein the water-absorbent sheet has a water content of 20 % or more.

15. An electrolyte-containing sheet according to claim 13 or 14, wherein the water-absorbent sheet has a thickness from 0.01 to 10 mm.

16. An electrolyte-containing sheet according to claim 13 or 14, wherein the water-absorbent sheet has a thickness from 0.1 to 3 mm.

17. An electrolyte-containing sheet according to any one of claims 13 to 16, wherein the water-absorbent substrate comprises at least one fiber selected from the group consisting of a natural fiber, a pulp fiber, a regenerated fiber, a glass fiber and a synthetic fiber.

18. An electrolyte-containing sheet according to claim 17, wherein the water-absorbent substrate is at least one selected from the group consisting of a filter paper, a membrane filter, a glass filter, and a filter cloth.

19. An electrolyte-containing sheet according to any one of claims 1 to 18, wherein the specific detection of the analyte with use of photocurrent is conducted by the steps comprising:
contacting a working electrode and a counter electrode with the electrolyte-containing sheet, wherein the working electrode has a surface provided with a probe substance to which the analyte is specifically bonded directly or indirectly, wherein a sensitizing dye is immobilized to the working electrode through the bonding;
applying light to the working electrode to photoexcite the sensitizing dye; and
detecting photocurrent flowing between the working electrode and the counter electrode due to electron transfer from the photoexcited sensitizing dye to the working electrode.

20. A method of specifically detecting an analyte with use of photocurrent, comprising the steps of:
contacting a working electrode and a counter electrode with the electrolyte-containing sheet according to any one of claims 1 to 18, wherein the working electrode has a surface provided with a probe substance to which the analyte is specifically bonded directly or indirectly, wherein a sensitizing dye is immobilized to the working electrode through the bonding;
applying light to the working electrode to photoexcite the sensitizing dye; and
detecting photocurrent flowing between the working electrode and the counter electrode due to electron transfer from the photoexcited sensitizing dye to the working electrode.

21. A sensor unit for use in specific detection of an analyte with use of photocurrent generated by photo-excitation of a sensitizing dye, comprising:
a working electrode;
a counter electrode opposed to the working electrode; and
the electrolyte-containing sheet according to any one of claims 1 to 18, the sheet being sandwiched between the working electrode and the counter electrode,
wherein each of the working electrode and the counter electrode has an electrode surface in contact with the electrolyte-containing sheet.

22. A sensor unit according to claim 21, further comprising:
a support substrate for supporting the counter electrode; and
a pressing member for pressing the working electrode, the electrolyte-containing sheet and the counter electrode toward the support substrate to be in close contact with each other.

23. A sensor unit according to claim 21, further comprising:
a support substrate for supporting the working electrode; and
a pressing member for pressing the counter electrode, the gel sheet, and the working electrode toward the support substrate to be in close contact with each other.

24. A sensor unit according to claim 22 or 23, wherein the pressing member further comprises an opening or a light transmissive portion for transmitting light for photo-excitation.

25. A sensor unit for use in specific detection of an analyte with use of photocurrent generated by photo-excitation of a sensitizing dye, comprising:
an electrode unit on which a working electrode and a counter electrode are patterned on a same plane; and
the electrolyte-containing sheet according to any one of claims 1 to 18 provided in contact with an electrode surface of each of the working electrode and the counter electrode.

26. A sensor unit according to claim 25, further comprising an opposing member opposed to the electrode unit,
wherein the electrolyte-containing sheet is sandwiched between the electrode unit and the opposing member.

27. A sensor unit according to claim 26, further comprising a pressing member for pressing the electrode unit and the electrolyte-containing sheet toward the opposing member to be in close contact with each other.

28. A sensor unit according to claim 26, further comprising a support substrate for supporting the electrode unit,
wherein the opposing member serves as a pressing member for pressing the electrolyte-containing sheet and the electrode unit
toward the support substrate to be in close contact with each other.

29. A sensor unit according to any one of claims 25 to 28, wherein the pressing member further comprises one or more openings or light transmissive portions for transmitting light for photo-excitation.

30. A sensor unit according to claim 25, further comprising:
a support substrate for supporting the electrode unit; and
a pressing member for pressing the electrode unit toward the support substrate to be in close contact therewith,
wherein the electrolyte-containing sheet is placed on the electrode unit.

31. A measuring device for use in specific detection of an analyte with use of photocurrent generated by photo-excitation of a sensitizing dye, comprising:
the sensor unit according to any one of claims 21 to 30;
a light source for applying light to the working electrode; and
an ammeter for measuring electric current flowing between the working electrode and the counter electrode.

32. A measuring device according to claim 31, wherein the light source comprises a light source capable of emitting light having different wavelength(s) depending on type of the sensitizing dye.

33. A measuring device according to claim 31 or 32, wherein a plurality of the light sources are provided, and wherein the measuring device further comprises a mechanism for switching the plural light sources for emitting.

34. A measuring device according to any one of claims 31 to 33, wherein the light source and/or the sensor unit further comprises an XY transfer mechanism for transferring the light source and the sensor unit relatively in an XY direction.

35. Use of the electrolyte-containing sheet according to any one of claims 1 to 18 as the electrolyte medium in specific detection of the analyte with use of photocurrent generated by photo-excitation of the sensitizing dye.
